# EUROPEAN PATENT APPLICATION

(11) **EP 4 671 907 A1**
(43) Date of publication of application: **31.12.2025**
(21) Application number: 25185860.1
(22) Date of filing: 27.06.2025
(51) Int. Cl.: G05D 1/693, G05D 1/246, G05D 1/698, G08G 1/00, G05D 105/28, G05D 107/70, G05D 109/10

(54) **METHOD AND SYSTEM FOR MOBILE ROBOT TRAFFIC MANAGEMENT**

(30) Priority: 27.06.2024 EP 24185041
(71) Applicant: Synaos GmbH, 30159 Hannover (DE)
(72) Inventor: Widenka, Johannes, 30169 Hannover (DE)
(74) Representative: Stellbrink & Partner Patentanwälte mbB

(57) **Abstract**

The present invention relates to a method for managing traffic in an area traversed by a plurality of mobile robots, wherein each of the plurality of mobile robots is configured to attain one of a plurality of allowed configurations, each of the plurality of mobile robots being further configured to change the configuration by making one of a plurality of allowed transitions, wherein the method comprises determining a blocked transition of a second mobile robot based, at least in part, on a configuration of a first mobile robot. The present invention also relates to a system for carrying out the method, and to a corresponding computer program product.

## Description

### Field

The present invention relates generally to the field of fleet management. More particularly, the present invention relates to a method, a system, and a computer program product for managing the motion of mobile robots deployed in an area.

### Background

Deadlock avoidance is an essential part of traffic management. If a fleet of mobile robots sharing the same traffic area moves uncoordinated, that can easily lead to a traffic deadlock. A traffic deadlock is a constellation of two or more traffic participants where none of them can move anymore, and the reason for the blockage for every of the participants is the current position of another participant.

In the following, a traffic situation may be considered a deadlock already if the participants can still move but will inevitably end up in a situation where they cannot move anymore. For example, in case of a narrow lane, there is already a deadlock if mobile robots have entered the narrow lane from both ends, even if they can move forward on that lane until they meet.

To avoid traffic deadlocks, the movement of participants may have to be coordinated. Some participants may get permission to continue their movement, while others may have to wait until it is their turn to pass the contended area. A simple example is a bi-directional lane which is too small for two mobile robots to pass each other. Deadlock-prone traffic situations can become arbitrary complex when the traffic space is constricted and the mobile robots physically occupy large areas (e.g., tugger trains with multiple trailers).

Embodiments of the present technology may be of particular advantage in ensuring that no mobile robot may make a movement which leads to a traffic deadlock.

Usually, the allowed movements of a robot are specified using a navigation graph. It consists of a set of nodes with coordinates, i.e., positions. The edges between the nodes specify possible transitions, i.e., if a transition exists from position A to position B, the mobile robot can move from A to B. Some mobile robots do not have an underlying navigation graph but can move freely in the traffic area. A lot of methods have been proposed to solve the problem of traffic deadlocks. However, these methods may impose several constraints on the scenario that may make them less flexible and limit their applicability.

One group of the methods developed is classified as multi-agent pathfinding (MAPF) as proposed, for example, in Yamauchi et. al. (2022), Standby-Based Deadlock Avoidance Method for Multi-Agent Pickup and Delivery Tasks*,* that provides a one-shot solution to a space-time path finding problem acting on multiple agents simultaneously. They incorporate deadlock safety into the route calculation problem and pre-assign timeslots for all agents on their nodes as part of the path. Methods in this group differ in how the methods assure non-conflicting paths, scalability, and optimality. Yamauchi et. al. (2022) introduces standby-based deadlock avoidance (SBDA). It identifies standby nodes to allow an agent to approach the target destination of its current task, even if the path from the standby node to the destination still would contain conflicts. This way, it effectively splits the movement tasks in two parts if possible. While this standby node is not passed, it is hidden for the navigation in succeeding route calculations. It requires distinct waiting nodes for every agent.

Priority inheritance with backtracking with temporary priority (PIBTTP), proposed by Fujitani et. al. (2022), Deadlock-Free Method for Multi-Agent Pickup and Delivery Problem using Priority Inheritance with Temporary Priority*,* assures conflict safety another way. It requires the traffic area to conform to a specific layout: there must be a central, bi-connected "main area" where no deadlocks can happen. The endpoints for the logistics task are located in tree-like graphs that follow a cul-de-sac layout. Each such tree-like graph must be connected to the main area. Then, agents leaving a tree are always given priority over agents entering it, while the main area can make sure that agents are always able to reorder themselves. This requires the task execution to always use the main area as an intermediate target, either by not necessarily taking the shortest path for every agent or by distinct pick and drop locations assuring that property. Additionally, the method requires agents to be able to change direction on the spot when a conflict is detected between an entering and a leaving agent inside the trees.

As a third MAPF solution, Sharon et. al. (2015), Conflict-based Search for Optimal Multi-Agent Pathfinding*,* describes conflict-based search (CBS) that aims to find the optimal solution for all agents moving from their current to a target location without conflicts. As with the other methods, it requires agents to move through cells that are either occupied or unoccupied. The approach computes and assigns a space-time path solution for all agents in one go. It uses a two-stage algorithm: the high level constructs a constraint tree with the constraints avoiding conflicts detected in the lower-level stage. The lower-level stage executes an A* variant for every agent to its target on the parent node to detect possible conflicts. Thus, for every node in the constraint tree, one constraint is added, and path finding is executed again for the agents, given the new constraint set. However, as for all global space-time solution based MAPF approaches, missing a time window invalidates the whole solution and deadlock safety after reaching the target location can only be guaranteed if all edges can also be executed backwards. Additionally, the execution time of the algorithm reaches impractical regions with growing amounts of agents quickly.

The second group of approaches is labeled multi agent pickup and delivery (MAPD). It extends the challenge to a stream of incoming pickup and delivery tasks. This family of approaches focuses on the continuously changing task environment, rather than a fixed set of tasks that require being executed as fast as possible. Essentially, they extend MAPF by incorporating task assignment and follow-up movements into the problem being solved, aiming at a solution for online environments rather than a pre-determined problem that can be optimally solved.

This extension of MAPF is studied in Ma et. al. (2017), Lifelong Multi-Agent Pathfinding for Online Pickup and Delivery Tasks*,* where the class of well-formed MAPD instances is defined and shown to be solvable. A MAPD instance is well-formed if it satisfies the following requirements: 1) every endpoint is only part of one executed task at a time; 2) sufficient non-target endpoints are available as park positions for not occupied vehicles; 3) every pair of endpoints is always accessible without passing through other endpoints. Agents take the shortest path to their next endpoint that is either part of the task it executes or a parking position. As soon as an agent discovers a conflict of the initialized route with an already existing route of another agent, it can wait at its current position, which is defined to not being part of another agent's path. The method always finds a solution but is suboptimal due to potentially long waiting times and the requirements formulated for the layout. Introducing task swapping makes it slightly more efficient but requires the assignment to be part of the solution.

Token Passing using Safe Interval Path Planning with Reservation Table (TP-SIPPwRT), described in Ma et. al. (2018), Lifelong Path Planning with Kinematic Constraints for Multi-Agent Pickup and Delivery*,* overcomes these shortcomings by incorporating time windows of unoccupied nodes into the route calculation. These time windows are derived by modelled agent's kinematic properties like translational and rotational velocity, including the dimension of the agent. The approach uses these properties to calculate a required buffer to the time window to leave and enter a node in a safe way. However, this imposes that the nodes are placed minimally the largest sized possible agent apart and requires the same kind of well-formed MAPD instances described in Ma et. al. (2017).

EP 3964909 A1 describes how to resolve deadlocks manually in a control center for automated vehicles. It does not cover deadlock avoidance. Instead, if a vehicle detects that it is part of a traffic deadlock, it notifies surrounding vehicles via vehicle-to-vehicle communication about it, and it notifies a control center about the situation using vehicle-to-network communication. The control center can then send instructions to the vehicle on how to resolve the deadlock.

CN 114355867A describes a conflict-avoiding method for a specific traffic layout, consisting of bidirectional lanes on a traffic grid, where crossing traffic of AGVs (automated guided vehicles) must be coordinated. The document explains a method to avoid conflicts on intersections between the lanes, called safety areas. It does not specifically address how to detect and avoid deadlocks.

CN 115658333A assumes that resources such as traffic segments are allocated (reserved) by an AGV before the AGV enters them. The method pre-computes deadlock resolution strategies for given resource sets. It matches allocation requests to these resource sets, and grants allocation based on the precomputed resolution strategies.

CN 114265705A describes how to prevent deadlocks for AMRs (autonomous mobile robots). It maintains pre-established deadlock prevention strategies for positions the AMRs can assume. As AMRs move freely, a maximum locking point distance is used to check if the strategy applies to the requested location. If the method finds a point position which matches the requested location, it applies the pre-established strategy to avoid deadlocks.

To sum up, none of the described methods may, at least sufficiently, meet the requirements of large heterogenous fleets of agents with large amounts of uncertainty, for example, with manual intervention, temporary obstacles on the planned path of an agent, and potentially overlapping navigation graphs that are strongly restricted due to traffic rules or differing agent kinematics. Additionally, the proposed methods may require path planning tightly coupled with deadlock avoidance, or require movements to be reversable, and all methods strictly require a globally synchronized state store, effectively sequencing all routing decisions even if they may be unrelated. This introduces a challenge for scalability. Apart from these limitations, the methods described seem to only work well in very controlled and mainly uniform scenarios, for example, a fully-automated warehouse.

### Summary

In light of the above, it is an object of the present invention to provide a technology that allows for detection and/or avoidance of deadlocks between mobile robots traversing an area that may be more robust, reliable, efficient, and scalable. These aims are achieved by embodiments of the present technology as described below.

According to a first aspect, the present invention relates to a method for managing traffic in an area traversed by a plurality of mobile robots, wherein each of the plurality of mobile robots is configured to attain one of a plurality of allowed configurations, each of the plurality of mobile robots being further configured to change the configuration by making one of a plurality of allowed transitions, wherein the method comprises: determining a blocked transition of a second mobile robot based, at least in part, on a configuration of a first mobile robot. Determination of a blocked transition of the second mobile robot may be based, at least in part, on the current configurations of both the first and the second mobile robots.

Configurations may be understood to comprise not only positions, but also, for example, a maximum/average size of the mobile robot, a maximum/average size of a load carried by the mobile robot, a size of a trailer attached to the mobile robot, an orientation of the mobile robot, etc. Generally, configurations may be defined based on pre-defined/known characteristics of the mobile robot. However, as may be appreciated, the characteristics during traversal may vary from the pre-defined/known characteristics. Embodiments of the present technology may be of particular advantage in assessing the motion of such mobile robots, as is further described below.

For example, to determine the plurality of allowed configurations for any defined mobile robot, first, all positions desired to be attained by the defined mobile robot may be considered. Then, for example, a maximum possible height or, generally, size, of the mobile robot at any given position may be considered. Thus, as may be appreciated, the plurality of allowed configurations, or at least a part thereof, may be different for each of the plurality of mobile robots.

Any defined mobile robot may change its configuration, from one allowed configuration to another allowed configuration, by means of a transition. As may be appreciated, transitions between allowed configurations may also be different for each of the plurality of mobile robots, depending on the allowed configurations for the mobile robots.

A transition of the second mobile robot may be blocked, for example, because the first mobile is in the target configuration of the second mobile robot. Alternatively, the second mobile robot may have to travel over a defined area to attain the second configuration, but the defined area is blocked because of the configuration of the first mobile robot. In particular, the defined area may be blocked because of a load carried by the first mobile robot, for example. Embodiments of the present invention may be of advantage for detecting deadlocks in all such situations.

The method may comprise storing an association between the blocked transition and the configuration of the first mobile robot. In other words, given a configuration of the first mobile robot, the blocked transition(s) of the second mobile robot may be determined.

The method may comprise determining all blocked transitions based, at least in part, on the configuration of the first mobile robot. In other words, the blocked transitions of all other mobile robots due to the current configuration of the first mobile robot may be determined. This may comprise, for example, varying the configuration of the second mobile robot over the allowed configurations of all the other mobile robots, and determining for each such configuration, the transitions from that configuration that are blocked due to the current configuration of the first mobile robot.

The method may comprise storing an association between each of the blocked transitions and the configuration of the first mobile robot. That is, given the configuration of the first mobile robot, all the blocked transitions of any other of the plurality of mobile robots may be determined.

The method may comprise varying the configuration of the first mobile robot.

The method may comprise storing an association between each of the blocked transitions and the configuration of the first mobile robot, for each of the varied configurations of the first mobile robot.

The method may comprise varying the configuration of the first mobile robot over each of the plurality of allowed configurations.

Thus, in general, the method may comprise determining all of the blocked transitions of any of the plurality of mobile robots from any of the allowed configurations of any of the plurality of mobile robots. In other words, the method may comprise creating an association between configurations and blocked transitions. For example, the method may comprise creating a look-up table of blocked transitions, wherein the look-up table may be used to match a given configuration with all the blocked transitions due to the given configuration. Note that a look-up table may only be considered exemplary but not limiting and any other structure for storing relationships may be used.

The plurality of allowed configurations may be comprised in a set, and the method may comprise segmenting the set of allowed configurations into a plurality of subsets, each of the plurality of subsets comprising at least one allowed configuration. The segmenting of configurations into subsets may be of particular advantage in allowing the method to scale, as described further below. In particular, the segmenting into subsets may allow determining configurations that are attained by a mobile robot independently of another mobile robot, allowing their simultaneous movement.

Any two of the plurality of subsets may be disjoint. This may be of advantage in improving efficiency and robustness, as the same configuration is not considered twice.

The segmentation into subsets may be based, at least in part, for example, on a grid overlaid on the area being traversed by the plurality of mobile robots. For example, each configuration belonging to one grid cell may be considered part of a single subset.

The segmentation of the set of allowed configurations into subsets may, in particular, be based, at least in part, on one or more transitions blocked if one of the plurality of mobile robots attains one of the allowed configurations. For example, two allowed configurations may be comprised in one subset if there is at least one common transition that is blocked when either of the two allowed configurations is occupied by one of the plurality of mobile robots.

The method may comprise storing a version number for each of the plurality of subsets. The version number may be any number that can be incremented in a defined manner. In particular, for example, the version number may comprise a whole number. The version number may be of advantage in tracking whether or not configurations belonging to a particular subset have been attained.

The method may comprise updating the version number(s) for any of the plurality of subsets. The version number may, in particular, be updated at the end of a deadlock check, as described further below.

The method may comprise causing a mobile robot to change its configuration. In other words, an end result of the method may be a movement of a mobile robot based, at least in part, on a result of detection of a deadlock in the future path of the mobile robot, as described further below.

The method may comprise forecasting a motion of at least one of the plurality of mobile robots, that may be called a forecasted mobile robot, along a future path, the future path comprising a sequence of transitions to be executed next by the at least one mobile robot. In other words, the method may comprise (virtually) executing each of the transitions in the sequence of transitions and evaluating a consequence of the transition so executed. The motion may be forecasted both for first- and higher-generation mobile robots, as described further below. First-generation mobile robots may be understood to comprise mobile robots that may send a request for moving and that may move in response to the result of the forecast of their future path being deadlock-free. Higher-generation mobile robots may be understood to comprise mobile robots, the motion of which may have to be forecasted as well, as part of the forecast for a first-generation mobile robot.

Forecasting the motion along the future path may comprise evaluating at least some of the transitions in the future path.

A result of forecasting the motion may be one of success or failure.

The method may comprise receiving a request, from at least one of the plurality of mobile robots, that may be called a first-generation mobile robot, to detect a deadlock in a future path, the future path comprising a sequence of transitions to be executed next by the requesting mobile robot.

The method may comprise evaluating the request, wherein evaluating the request may comprise forecasting the motion of the first-generation mobile robot.

A result of evaluating the request may be one of success or failure.

The method may comprise, in response to the result being failure, queueing the request for re-evaluation.

The first-generation mobile robot may be configured to change its configuration based, at least in part, on the result of evaluating the request. In other words, the first-generation mobile robot may be a mobile robot that requests to move along its path. The evaluation of the request may comprise forecasting the motion of the first-generation mobile robot along its future path.

The evaluation of the request of the first-generation mobile robot may correspond to a cycle, the cycle being initiated at the start of the evaluation of the request of the first-generation mobile robot and the cycle being terminated with the determination of the result of the evaluation of the request of the first-generation mobile robot. The use of a cycle may be of advantage in keeping track of different, higher-generation mobile robots encountered during the forecast for the first-generation mobile robot.

The future path may comprise a known future path comprising a known sequence of transitions to be executed next by the mobile robot.

The method may comprise storing/adding and/or deleting, during the cycle, the configuration attained by each mobile robot involved in the cycle. That is, the method may comprise recording a history of the configurations of each mobile robot for which motion is forecasted during a cycle, including the first-generation mobile robot that initiated the cycle, as well as any higher-generation mobile robot for which motion is forecasted during the cycle (to facilitate forecasting for the first-generation mobile robot).

The method may comprise storing, during the cycle, the transitions blocked based, at least in part, on the configurations attained by each mobile robot involved in the cycle. The method may further comprise deleting, during the cycle, transitions that get unblocked during the cycle. For example, a mobile robot being forecasted may transition from a start configuration to an end configuration. Then, the method may comprise storing the transitions blocked based, at least in part, on the end configuration of the mobile robot. Further, the method may comprise deleting the transitions that were blocked based, at least in part, on the starting configuration of the mobile robot. The storing and deleting of blocked transitions may be of particular advantage in detecting a deadlock in the future path of a mobile robot.

The method may comprise retrieving and storing, during the cycle, a current version number of the subset comprising the configuration attained by each mobile robot involved in the cycle.

Evaluating a transition may comprise determining if the transition is blocked.

Determining if the transition is blocked may comprise determining if there exists an association between the transition and a current configuration of at least one of the plurality of mobile robots other than the forecasted mobile robot. In other words, if there is an association, as described above, between the transition being evaluated and a current configuration of a mobile robot other than the mobile robot being forecasted, the evaluated transition is blocked.

Determining if the transition is blocked may comprise determining if the transition was stored as a blocked transition during the cycle. For example, a first transition in the future path of a first-generation mobile robot may already be blocked due to a current configuration of another mobile robot. The first transition would then have been stored as a blocked transition at the beginning of the cycle.

The method may comprise, for a first-generation mobile robot, in response to the transition being determined to be blocked, determining the result of the evaluation to be failure and not allowing the first-generation mobile robot to move.

At least one of the plurality of allowed configurations may comprise a mutually exclusive configuration, the mutually exclusive configuration being a configuration that may be attained by only one of the plurality of mobile robots at any time. For example, if positions are used as configurations, they may be mutually exclusive, as any given position can typically be occupied by only one mobile robot at a time. Note that a mutually exclusive configuration may not be attained by a plurality of mobile robots at any given time in the real/physical/tangible world. However, during evaluation of a transition as described herein, a virtual transition may be executed, and during such a virtual transition, a mobile robot may attain a mutually exclusive configuration that is currently attained by another mobile robot. Or, it may at least be possible to determine that the forecasted mobile robot would have to attain a mutually exclusive configuration that is currently attained by another mobile robot if the transition is to be executed.

Determining if the transition is blocked may comprise determining if the transition is possible.

Determining if the transition is possible may comprise determining if a configuration attained by the forecasted mobile robot during and/or resulting from the transition comprises a mutually exclusive configuration.

In other words, during a transition from a starting configuration to an ending configuration, the forecasted mobile robot may attain one or more intermediate configurations. The intermediate configurations may or may not correspond to any of the plurality of allowed configurations as described above, and may result by virtue of a continuous nature of transitions. For example, when configurations correspond to positions, the forecasted mobile robot may move from one allowed position to another allowed position. In this case, some intermediate position(s) may be attained by the forecasted mobile robot. The transition may not be possible if, for example, an intermediate configuration is a mutually exclusive configuration and is currently attained by a mobile robot other than the forecasted mobile robot. For example, if any of the intermediate position(s) as described above are occupied by a mobile robot other than the forecasted mobile robot moving between two positions.

The method may comprise, in response to the configuration attained by the forecasted mobile robot being a mutually exclusive configuration, determining if the mutually exclusive configuration is currently attained, at least in part, by a mobile robot other than the forecasted mobile robot.

The transition may be determined to be possible if the configuration attained is mutually exclusive and is not currently attained by a mobile robot other than the forecasted mobile robot.

The transition may be determined to be possible if the resulting configuration is not mutually exclusive.

The method may comprise, in response to the transition being determined possible, executing, virtually, the transition.

The method may comprise storing the configuration of the forecasted mobile robot resulting from the transition.

The method may comprise retrieving and storing the current version number of the subset to which the resulting configuration belongs.

The method may comprise deleting, for the current cycle, the blocked transitions associated with the configuration of the forecasted mobile robot before executing the transition.

The method may comprise storing, for the current cycle, the blocked transitions associated with the configuration of the forecasted mobile robot after executing the transition.

The method may comprise, after updating, for the current cycle, the blocked transitions, determining if there still exists a blocked transition stored/added in the current cycle.

The method may comprise, in response to there still existing a blocked transition stored/added in the current cycle, evaluating the next transition in the future path of the forecasted mobile robot.

The method may comprise, in response to there existing no blocked transition added in the current cycle, determining if the last virtually executed transition of the forecasted mobile robot was along a bidirectional path.

The determination if the last virtually executed transition was along a bidirectional path may be based, at least in part, on a comparison between the blocked transitions associated with the configurations of the forecasted mobile robot before and after the execution of the transition.

The method may comprise, in response to the last virtually executed transition of the forecasted mobile robot not being along a bidirectional path, sending a request to update the version number for each of the subsets for which the version number was stored during the cycle.

The method may comprise, in response to sending the request, receiving a notification.

The notification may comprise a notification corresponding to an inconsistency between the version number of a subset stored during the cycle and a current version number of the subset. This may correspond to another mobile robot, being forecasted concurrently, having attained one of the configurations encountered during the current cycle, indicating a possible overlap of paths of the different mobile robots being evaluated concurrently. In this case, allowing the first-generation mobile robot to move, for example, may lead to a deadlock.

The method may comprise, in response to receiving the notification corresponding to an inconsistency, determining the result of evaluating the request of the forecasted mobile robot to be failure.

The notification may comprise a notification corresponding to success in updating the version number. If the version number can be updated without any inconsistency, this may indicate that the configurations encountered during the cycle are independent of those attained by a mobile robot being forecasted concurrently. Thus, the two mobile robots may be considered to be moving along independent paths and there is no possibility of a deadlock.

The method may comprise, in response to receiving the notification corresponding to success, determining the result of forecasting the motion of the forecasted mobile robot to be success.

The method may comprise, in response to the result of the forecasting of the motion being success, allowing the first-generation mobile robot to execute the first transition along the future path. After executing the first transition, the first-generation mobile robot may again send a request for the subsequent path.

The method may comprise, in response to the last virtually executed transition of the forecasted mobile robot being along a bidirectional path, evaluating the next transition of the forecasted mobile robot. In other words, so long as the mobile robot is moving along a bidirectional path, there is a possibility of a deadlock. For example, as described above, two mobile robots may enter opposite ends of a narrow lane. While some future transitions of either of the two mobile robots may not be blocked, there is bound to be one blocked transition eventually if they keep moving along the narrow lane. Thus, it may be necessary to evaluate all transitions of a mobile robot that lie along a bidirectional path to ensure that no deadlocks are detected.

The configuration attained by the forecasted mobile robot during and/or resulting from the transition, as described above, during evaluation if a transition is possible, may be mutually exclusive and may currently be attained by a mobile robot other than the forecasted mobile robot.

The method may comprise assigning a generation higher than the generation of the forecasted mobile robot, such as one higher, to the mobile robot other than the forecasted mobile robot currently attaining the mutually exclusive configuration. In other words, a second mobile robot may be encountered during the forecast of motion for a first mobile robot, such that the motion of the second mobile robot may need to be forecasted, to allow robust detection of deadlocks along the future path of the first mobile robot. An exemplary situation in which forecasting the second mobile robot may become necessary is described in detail further below.

The method may comprise forecasting the motion of a higher-generation mobile robot.

The higher-generation mobile robot may be configured to not change its configuration based, at least in part, on a result of the forecast.

The method may comprise forecasting the motion of the higher-generation mobile robot as part of the cycle initiated by the first-generation mobile robot. Thus, the motion (or execution of future transitions) of higher-generation mobile robots may be carried out automatically as part of the forecast of motion for the first-generation mobile robot.

The method may comprise, in response to the next transition of the higher-generation mobile robot being stored as a blocked transition during the cycle, determining a last configuration of each mobile robot, other than the higher-generation mobile robot, involved in the cycle, such that the next transition of the higher-generation mobile robot is no longer blocked. This is in contrast to the next transition of the first-generation mobile robot being determined to have been stored as a blocked transition during the cycle, where the deadlock check may stop and the request may be queued for re-evaluation. For a higher-generation mobile robot, instead, an attempt may be made to unblock the next transition of the higher-generation mobile robot.

The method may comprise moving, virtually, each mobile robot involved in the cycle to the said last configuration.

The method may comprise determining if the first-generation mobile robot has moved back to its starting configuration as a result of each mobile robot involved in the cycle being moved to the said last configuration.

The result of the evaluation of the request of the first-generation mobile robot corresponds to failure if the first-generation mobile robot is determined to have moved back to its starting configuration. In other words, if the transitions made (virtually) by the first-generation mobile robot in the current cycle are reversed to unblock the next transition of the higher-generation mobile robot, a high likelihood of deadlock is detected.

The method may comprise, in response to the first-generation mobile robot not having moved back to its starting configuration, determining if the next transition of the higher-generation mobile robot is possible. Thus, once the next transition of the higher-generation mobile robot has been unblocked by undoing some of the transitions of the other mobile robots involved in the current cycle, the method may continue as for the first-generation mobile robot.

Alternatively, the next transition of the higher-generation mobile robot may not be unblocked by undoing the transitions as described above. The result of the forecast of the higher-generation mobile robot may then be determined to be failure.

The method may comprise, in response to the result of the forecast of the higher-generation mobile robot being failure, determining the result of the evaluation of the request of the first-generation mobile robot to be failure. In other words, if a higher-generation mobile robot involved in the cycle is likely to end up in a deadlock, it is also likely that the first-generation mobile robot will end up in a deadlock.

The method may comprise, in response to the result of the forecast of the higher-generation mobile robot being success, evaluating the next transition of a mobile robot of the highest generation lower than the generation of the higher-generation mobile robot as part of the cycle initiated by the first-generation mobile robot. Thus, a sort of tree of mobile robots is created, wherein, at any given time, the motion of a single mobile robot is forecasted, the single mobile robot being a child of another mobile robot, that being a child of another mobile robot, and so on, with the first-generation mobile robot being the root of the tree. Once the forecast of a mobile robot results in success, the forecast for its parent is continued, until the forecast for the root, i.e., the first-generation mobile robot is complete.

The method may comprise receiving the request from a plurality of the plurality of mobile robots. In other words, the method may comprise receiving and evaluating, in parallel, requests from a plurality of first-generation mobile robots. As described elsewhere herein, the version numbers of the subsets of configurations, as described above, may be of particular advantage in allowing the parallel evaluation of requests.

The forecasted mobile robot may comprise a mobile robot with an unknown future path, the unknown future path comprising a plurality of sequences of transitions, any one of which can be next executed by the mobile robot, and wherein the future path may comprise one of the plurality of sequences of transitions.

Evaluating the request of the mobile robot with an unknown future path may comprise varying the future path over each of the plurality of sequences and forecasting the motion for each such future path.

The result of the evaluation may correspond to success if the result of the forecast for at least one of the plurality of sequences corresponds to success.

The method may comprise, in response to the result of the forecast corresponding to success, causing the first-generation mobile robot to move along any one of the plurality of sequences, the result of which corresponds to success. That is, the motion of the mobile robot may be forecast along each of the plurality of paths, to determine if at least one of those paths is deadlock-free.

According to a second aspect, the present invention relates to a system for managing traffic in an area traversed by a plurality of mobile robots, wherein each of the plurality of mobile robots may be configured to attain one of a plurality of allowed configurations, each of the plurality of mobile robots being further configured to change the configuration by making one of a plurality of allowed transitions, wherein the system may be configured to: determine a blocked transition of a second mobile robot based, at least in part, on a configuration of a first mobile robot.

The system may comprise a blocked transition lookup component, wherein the system, particularly the blocked transition lookup component thereof, may be configured to store an association between the blocked transition and the configuration of the first mobile robot. The blocked transition lookup component may comprise, for example, a memory unit. Or, the blocked transition lookup component may be configured to access a memory unit.

The system may be configured to determine all blocked transitions based, at least in part, on the configuration of the first mobile robot.

The system, particularly the blocked transition lookup component thereof, may be configured to store an association between each of the blocked transitions and the configuration of the first mobile robot.

The system may be configured to vary the configuration of the first mobile robot.

The system, particularly the blocked transition lookup component thereof, may be configured to store an association between each of the blocked transitions and the configuration of the first mobile robot, for each of the varied configurations of the first mobile robot.

The system may be configured to vary the configuration of the first mobile robot over each of the plurality of allowed configurations.

The plurality of allowed configurations may be comprised in a set; the system may comprise a data processing component, and the system, particularly the data processing component thereof, may be configured to segment the set of allowed configurations into a plurality of subsets, each of the plurality of subsets comprising at least one allowed configuration.

Any two of the plurality of subsets may be disjoint.

The system may comprise a synchronization component, and the system, particularly the synchronization component thereof, may be configured to store a version number for each of the plurality of subsets. The synchronization component may, for example, comprise a memory unit. Or, the synchronization component may be configured to access a memory unit.

The system may be configured to update the version number(s) for any of the plurality of subsets.

The system may be configured to cause a mobile robot to change its configuration.

The system may comprise a reservation request processing component, and the system, particularly the reservation request processing component thereof, may be configured to forecast a motion of at least one of the plurality of mobile robots, that may be referred to as a forecasted mobile robot, along a future path, the future path comprising a sequence of transitions to be executed next by the at least one mobile robot. For example, the data processing unit of the system may serve as the reservation request processing component. Alternatively, the system may comprise a separate reservation request processing component, wherein the reservation request processing component may comprise, for example, a data processing unit and/or a communication unit.

Forecasting the motion along the future path may comprise evaluating at least of the transitions in the future path.

A result of forecasting the motion may be one of success or failure.

The system may comprise a reservation request processing component, and the system, particularly the reservation request processing component thereof, may be configured to receive a request, from at least one of the plurality of mobile robots, that may be called first-generation mobile robot, to detect a deadlock in a future path, the future path comprising a sequence of transitions to be executed next by the requesting mobile robot.

The system may be configured to evaluate the request, wherein evaluating the request may comprise forecasting the motion of the first-generation mobile robot.

A result of evaluating the request may be one of success or failure.

The system may be configured, in response to the result being failure, to queue the request for re-evaluation.

The first-generation mobile robot may be configured to change its configuration based, at least in part, on the result of evaluating the request.

The evaluation of the request of the first-generation mobile robot may correspond to a cycle, the cycle being initiated at the start of the evaluation of the request of the first-generation mobile robot and the cycle being terminated with the determination of the result of the evaluation of the request of the first-generation mobile robot.

The future path may comprise a known future path comprising a known sequence of transitions to be executed next by the mobile robot.

The system may be configured to store/add and/or delete, during the cycle, the configuration attained by each mobile robot involved in the cycle.

The system may be configured to store, during the cycle, the transitions blocked based, at least in part, on the configurations attained by each mobile robot involved in the cycle.

The system may be configured to retrieve and store, during the cycle, a current version number of the subset comprising the configuration attained by each mobile robot involved in the cycle.

Evaluating a transition may comprise determining if the transition is blocked.

Determining if the transition is blocked may comprise determining if there exists an association between the transition and a current configuration of at least one of the plurality of mobile robots other than the forecasted mobile robot.

Determining if the transition is blocked may comprise determining if the transition was stored as a blocked transition during the cycle.

The system may be configured, in response to the transition being determined to be blocked, to determine the result of the evaluation to be failure.

At least one of the plurality of allowed configurations may comprise a mutually exclusive configuration, the mutually exclusive configuration being a configuration that may be attained by only one of the plurality of mobile robots at any time.

Determining if the transition is blocked may comprise determining if the transition is possible.

Determining if the transition is possible may comprise determining if a configuration attained by the forecasted mobile robot during and/or resulting from the transition comprises a mutually exclusive configuration.

The system may be configured, in response to the configuration attained by the forecasted mobile robot being a mutually exclusive configuration, to determine if the mutually exclusive configuration is currently attained by a mobile robot other than the forecasted mobile robot.

The transition may be determined to be possible if the configuration attained is mutually exclusive and is not currently attained by a mobile robot other than the forecasted mobile robot.

The transition may be determined to be possible if the resulting configuration is not mutually exclusive.

The system may be configured, in response to the transition being determined possible, to execute, virtually, the transition.

The system may be configured to store the configuration of the forecasted mobile robot resulting from the transition.

The system may be configured to retrieve and store the current version number of the subset to which the resulting configuration belongs.

The system may be configured to delete, for the current cycle, the blocked transitions associated with the configuration of the forecasted mobile robot before executing the transition.

The system may be configured to store, for the current cycle, the blocked transitions associated with the configuration of the forecasted mobile robot after executing the transition.

The system may be configured, after updating, for the current cycle, the blocked transitions, to determine if there still exists a blocked transition stored/added in the current cycle.

The system may be configured, in response to there still existing a blocked transition stored/added in the current cycle, to evaluate the next transition in the future path of the forecasted mobile robot.

The system may be configured, in response to there existing no blocked transition added in the current cycle, to determine if the last virtually executed transition of the forecasted mobile robot was along a bidirectional path.

The determination if the last virtually executed transition was along a bidirectional path may be based, at least in part, on a comparison between the blocked transitions associated with the configurations of the forecasted mobile robot before and after the execution of the transition.

The system may be configured, in response to the last virtually executed transition of the requesting mobile robot not being along a bidirectional path, to send a request to update the version number for each of the subsets for which the version number was stored during the cycle.

The system may be configured, in response to sending the request, to receive a notification.

The notification may comprise a notification corresponding to an inconsistency between the version number of a subset stored during the cycle and a current version number of the subset.

The system may be configured, in response to receiving the notification corresponding to an inconsistency, to determine the result of forecasting the motion of the forecasted mobile robot to be failure.

The notification may comprise a notification corresponding to success in updating the version number.

The system may be configured, in response to receiving the notification corresponding to success, to determine the result of forecasting the motion of the forecasted mobile robot to be success.

The system may be configured, in response to the result of the evaluation of the request being success, to allow the first-generation mobile robot to execute the first transition along the future path.

The system may be configured, in response to the last virtually executed transition of the forecasted mobile robot being along a bidirectional path, to evaluate the next transition of the forecasted mobile robot.

The configuration attained by the forecasted mobile robot may be mutually exclusive and may currently be attained by a mobile robot other than the forecasted mobile robot.

The system may be configured to assign a generation higher than the generation of the forecasted mobile robot, such as one higher, to the mobile robot currently attaining the mutually exclusive configuration.

The system may be configured to forecast the motion of a higher-generation mobile robot.

The higher-generation mobile robot may be configured to not change its configuration based, at least in part, on a result of the forecast.

The system may be configured to forecast the motion of the higher-generation mobile robot as part of the cycle initiated by the first-generation mobile robot.

The system may be configured, in response to the next transition of the higher-generation mobile robot being stored as a blocked transition during the cycle, to determine a last configuration of each mobile robot, other than the higher-generation mobile robot, involved in the cycle such that the next transition of the higher-generation mobile robot is no longer blocked.

The system may be configured to move, virtually, each mobile robot involved in the cycle to the said last configuration.

The system may be configured to determine if the first-generation mobile robot has moved back to its starting configuration as a result of each mobile robot involved in the cycle being moved to the said last configuration.

The result of the evaluation of the request of the first-generation mobile robot may correspond to failure if the first-generation mobile robot is determined to have moved back to its starting configuration.

The system may be configured, in response to the first-generation mobile robot not having moved back to its starting configuration, to determine if the next transition of the higher-generation mobile robot is possible.

The system may be configured, in response to the result of the forecast of the higher-generation mobile robot being failure, to determine the result of the evaluation of the request of the first-generation mobile robot to be failure.

The system may be configured, in response to the result of the forecast of the higher-generation mobile robot being success, to evaluate the next transition of a mobile robot of the highest generation lower than the generation of the higher-generation mobile robot as part of the cycle initiated by the first-generation mobile robot.

The system may be configured to receive the request from a plurality of the plurality of mobile robots.

The forecasted mobile robot may comprise a mobile robot with an unknown future path, the unknown future path comprising a plurality of sequences of transitions, any one of which can be next executed by the forecasted mobile robot, and wherein the future path may comprise one of the plurality of sequences of transitions.

Forecating the motion of the mobile robot with an unknown future path may comprise varying the future path over each of the plurality of sequences and forecasting the motion for each such future path.

The result of the forecast may correspond to success if the result of the forecast for at least one of the plurality of sequences corresponds to success.

The system may be configured, in response to the result of the evaluation corresponding to success, to cause the first-generation mobile robot to move along any one of the plurality of sequences, the result of which corresponds to success.

The system may comprise a data processing component.

The system may be configured to communicate with any of the plurality of mobile robots.

The system may be configured to perform the method according to any of the preceding method embodiments.

According to a third aspect, the present invention relates to a computer program product comprising instructions, when executed on a data processing component of a system according to any of the preceding system embodiments, to perform the method according to any of the preceding method embodiments.

The present invention is also described by the following numbered embodiments.

Below method embodiments will be discussed. These are abbreviated by the letter "M" followed by a number. Whenever reference is herein made to the method embodiments, the following embodiments are meant.

M1. A method for managing traffic in an area traversed by a plurality of mobile robots, wherein each of the plurality of mobile robots is configured to attain one of a plurality of allowed configurations, each of the plurality of mobile robots being further configured to change the configuration by making one of a plurality of allowed transitions, wherein the method comprises:
determining a blocked transition of a second mobile robot based, at least in part, on a configuration of a first mobile robot.

M2. The method according to the preceding embodiment, wherein the method comprises storing an association between the blocked transition and the configuration of the first mobile robot.

M3. The method according to any of the 2 preceding embodiments, wherein the method comprises determining all blocked transitions based, at least in part, on the configuration of the first mobile robot.

M4. The method according to the preceding embodiment and with the features of embodiment M2, wherein the method comprises storing an association between each of the blocked transitions and the configuration of the first mobile robot.

M5. The method according to any of the preceding method embodiments, wherein the method comprises varying the configuration of the first mobile robot.

M6. The method according to the preceding embodiment and with the features of embodiment M4, wherein the method comprises storing an association between each of the blocked transitions and the configuration of the first mobile robot, for each of the varied configurations of the first mobile robot.

M7. The method according to any of the 2 preceding embodiments, wherein the method comprises varying the configuration of the first mobile robot over each of the plurality of allowed configurations.

M8. The method according to any of the preceding method embodiments, wherein the plurality of allowed configurations is comprised in a set, and wherein the method comprises segmenting the set of allowed configurations into a plurality of subsets, each of the plurality of subsets comprising at least one allowed configuration.

M9. The method according to the preceding embodiment, wherein any two of the plurality of subsets are disjoint.

M10. The method according to any of the 2 preceding embodiments, wherein the method comprises storing a version number for each of the plurality of subsets.

M11. The method according to the preceding embodiment, wherein the method comprises updating the version number(s) for any of the plurality of subsets.

M12. The method according to any of the preceding method embodiments, wherein the method comprises causing a mobile robot to change its configuration.

M13. The method according to any of the preceding method embodiments, wherein the method comprises forecasting a motion of at least one of the plurality of mobile robots, that may be referred to as a forecasted mobile robot, along a future path, the future path comprising a sequence of transitions to be executed next by the at least one mobile robot.

M14. The method according to the preceding embodiment, wherein forecasting the motion along the future path comprises evaluating at least some of the transitions in the future path.

M15. The method according to any of the 2 preceding method embodiments, wherein a result of forecasting the motion is one of success or failure.

M16. The method according to any of the preceding method embodiments, wherein the method comprises receiving a request, from at least one of the plurality of mobile robots, that may be called a first-generation mobile robot, to detect a deadlock in a future path, the future path comprising a sequence of transitions to be executed next by the requesting mobile robot.

M17. The method according to the preceding embodiment and with the features of embodiment M13, wherein the method comprises evaluating the request, wherein evaluating the request comprises forecasting the motion of the first-generation mobile robot.

M18. The method according to the preceding embodiment and with the features of embodiment M15, wherein a result of evaluating the request corresponds to the result of forecasting the motion.

M19. The method according to the preceding embodiment, wherein the method comprises, in response to the result being failure, queueing the request for re-evaluation.

M20. The method according to any of the 3 preceding embodiments, wherein the first-generation mobile robot is configured to change its configuration based, at least in part, on the result of evaluating the request.

M21. The method according to any of the preceding embodiments and with the features of embodiment M17, wherein the evaluation of the request of the first-generation mobile robot corresponds to a cycle, the cycle being initiated at the start of the evaluation of the request of the first-generation mobile robot and the cycle being terminated with the determination of the result of the evaluation of the request of the first-generation mobile robot.

M22. The method according to the any of the preceding method embodiments and with the features of any of embodiments M13, and M16, wherein the future path comprises a known future path comprising a known sequence of transitions to be executed next by the mobile robot.

M23. The method according to any of the preceding method embodiments and with the features of embodiment M21, wherein the method comprises storing/adding and/or deleting, during the cycle, the configuration attained by each mobile robot involved in the cycle.

M24. The method according to any the preceding method embodiments and with the features of embodiment M21, wherein the method comprises storing, during the cycle, the transitions blocked based, at least in part, on the configurations attained by each mobile robot involved in the cycle.

M25. The method according to any of the preceding method embodiments and with the features of embodiments M10, and M21, wherein the method comprises retrieving and storing, during the cycle, a current version number of the subset comprising the configuration attained by each mobile robot involved in the cycle.

M26. The method according to any of the preceding method embodiments and with the features of embodiment M14, wherein evaluating a transition comprises determining if the transition is blocked.

M27. The method according to the preceding embodiment and with the features of embodiment M4, wherein determining if the transition is blocked comprises determining if there exists an association between the transition and a current configuration of at least one of the plurality of mobile robots other than the forecasted mobile robot.

M28. The method according to any of the 2 preceding embodiments and with the features of embodiment M24, wherein determining if the transition is blocked comprises determining if the transition was stored as a blocked transition during the cycle.

M29. The method according to any of the 3 preceding embodiments and with the features of embodiments M18, and M20, wherein the method comprises, in response to the transition being determined to be blocked, determining the result of the evaluation to be failure.

M30. The method according to any of the preceding method embodiments, wherein at least one of the plurality of allowed configurations comprises a mutually exclusive configuration, the mutually exclusive configuration being a configuration that may be attained by only one of the plurality of mobile robots at any time.

M31. The method according to any of the preceding method embodiments and with the features of embodiment M26, wherein determining if the transition is blocked comprises determining if the transition is possible.

M32. The method according to the preceding embodiment and with the features of embodiment M30, wherein determining if the transition is possible comprises determining if a configuration attained by the forecasted mobile robot during, and/or resulting from, the transition comprises a mutually exclusive configuration.

M33. The method according to the preceding embodiment, wherein the method comprises, in response to the configuration attained by the forecasted mobile robot being a mutually exclusive configuration, determining if the mutually exclusive configuration is currently attained, at least in part, by a mobile robot other than the forecasted mobile robot.

M34. The method according to the preceding embodiment, wherein the transition is determined to be possible if the configuration attained is mutually exclusive and is not currently attained, at least in part, by a mobile robot other than the forecasted mobile robot.

M35. The method according to any of the 2 preceding embodiments, wherein the transition is determined to be possible if the resulting configuration is not mutually exclusive.

M36. The method according to any of the preceding method embodiments and with the features of embodiment M31, wherein the method comprises, in response to the transition being determined possible, executing, virtually, the transition.

M37. The method according to the preceding embodiment and with the features of embodiment M23, wherein the method comprises storing the configuration of the forecasted mobile robot resulting from the transition.

M38. The method according to the preceding embodiment and with the features of embodiment M25, wherein the method comprises retrieving and storing the current version number of the subset to which the resulting configuration belongs.

M39. The method according to any of the 3 preceding embodiments and with the features of embodiments M4, and M24, wherein the method comprises deleting, for the current cycle, the blocked transitions associated with the configuration of the forecasted mobile robot before executing the transition.

M40. The method according to any of the 4 preceding embodiments and with the features of embodiments M4, and M24, wherein the method comprises storing, for the current cycle, the blocked transitions associated with the configuration of the forecasted mobile robot after executing the transition.

M41. The method according to any of the preceding method embodiments and with the features of embodiments M36, M39, and M40, wherein the method comprises, after updating, for the current cycle, the blocked transitions, determining if there still exists a blocked transition stored/added in the current cycle.

M42. The method according to the preceding embodiment, wherein the method comprises, in response to there still existing a blocked transition stored/added in the current cycle, evaluating the next transition in the future path of the forecasted mobile robot.

M43. The method according to any of the 2 preceding embodiments, wherein the method comprises, in response to there existing no blocked transition added in the current cycle, determining if the last virtually executed transition of the forecasted mobile robot was along a bidirectional path.

M44. The method according to the preceding embodiment, wherein the determination if the last virtually executed transition was along a bidirectional path is based, at least in part, on a comparison between the blocked transitions associated with the configurations of the forecasted mobile robot before and after the execution of the transition.

M45. The method according to any of the preceding method embodiments and with the features of embodiments M11, M15, and M25, wherein the method comprises, in response to the last virtually executed transition of the forecasted mobile robot not being along a bidirectional path, sending a request to update the version number for each of the subsets for which the version number was stored during the cycle.

M46. The method according to the preceding embodiment, wherein the method comprises, in response to sending the request, receiving a notification.

M47. The method according to the preceding embodiment, wherein the notification comprises a notification corresponding to an inconsistency between the version number of a subset stored during the cycle and a current version number of the subset.

M48. The method according to the preceding embodiment, wherein the method comprises, in response to receiving the notification corresponding to an inconsistency, determining the result of forecasting the motion of the forecasted mobile robot to be failure.

M49. The method according to any of the 3 preceding embodiments, wherein the notification comprises a notification corresponding to success in updating the version number.

M50. The method according to the preceding embodiment, wherein the method comprises, in response to receiving the notification corresponding to success, determining the result of forecasting the motion of the forecasted mobile robot to be success.

M51. The method according to any of the preceding method embodiments and with the features of embodiments M18, and M20, wherein the method comprises, in response to the result of the evaluation of the request being success, allowing the first-generation mobile robot to execute the first transition along the future path.

M52. The method according to any of the preceding method embodiments and with the features of embodiment M43, wherein the method comprises, in response to the last virtually executed transition of the forecasted mobile robot being along a bidirectional path, evaluating the next transition of the forecasted mobile robot.

M53. The method according to any of the preceding method embodiments and with the features of embodiment M33, wherein the configuration attained is mutually exclusive and is currently attained by a mobile robot other than the forecasted mobile robot.

M54. The method according to the preceding embodiment, wherein the method comprises assigning a generation higher than the generation of the forecasted mobile robot, such as one higher, to the mobile robot other than the forecasted mobile robot currently attaining the mutually exclusive configuration.

M55. The method according to any of the preceding embodiments and with the features of embodiment M13, wherein the method comprises forecasting the motion of a higher-generation mobile robot.

M56. The method according to the preceding embodiment and with the features of embodiment M15, wherein the higher-generation mobile robot is configured to not change its configuration based, at least in part, on a result of the forecast.

M57. The method according to any of the 2 preceding embodiments and with the features of embodiments M13, M21, and M54, wherein the method comprises forecasting the motion of the higher-generation mobile robot as part of the cycle initiated by the first-generation mobile robot.

M58. The method according to the preceding embodiment and with the features of embodiments M23, and M28, wherein the method comprises, in response to the next transition of the higher-generation mobile robot being stored as a blocked transition during the cycle, determining a last configuration of each mobile robot, other than the higher-generation mobile robot, involved in the cycle such that the next transition of the higher-generation mobile robot is no longer blocked.

M59. The method according to the preceding embodiment, wherein the method comprises moving, virtually, each mobile robot involved in the cycle to the said last configuration.

M60. The method according to the preceding embodiment, wherein the method comprises determining if the first-generation mobile robot has moved back to its starting configuration as a result of each mobile robot involved in the cycle being moved to the said last configuration.

M61. The method according to the preceding embodiment and with the features of embodiment M18, wherein the result of the evaluation of the request of the first-generation mobile robot corresponds to failure if the first-generation mobile robot is determined to have moved back to its starting configuration.

M62. The method according to any of the 2 preceding embodiments and with the features of embodiment M31, wherein the method comprises, in response to the first-generation mobile robot not having moved back to its starting configuration, determining if the next transition of the higher-generation mobile robot is possible.

M63. The method according to any of the preceding embodiments and with the features of embodiments M15, and M57, wherein the method comprises, in response to the result of the forecast of the higher-generation mobile robot being failure, determining the result of the evaluation of the request of the first-generation mobile robot to be failure.

M64. The method according to any of the preceding embodiments and with the features of embodiments M15, and M57, wherein the method comprises, in response to the result of the forecast of the higher-generation mobile robot being success, evaluating the next transition of a mobile robot of the highest generation lower than the generation of the higher-generation mobile robot as part of the cycle initiated by the first-generation mobile robot.

M65. The method according to any of the preceding method embodiments and with the features of embodiment M16, wherein the method comprises receiving the request from a plurality of the plurality of mobile robots.

M66. The method according to any of the preceding method embodiments and with the features of embodiment M13, wherein the forecasted mobile robot comprises a mobile robot with an unknown future path, the unknown future path comprising a plurality of sequences of transitions, any one of which can be next executed by the forecasted mobile robot, and wherein the future path comprises one of the plurality of sequences of transitions.

M67. The method according to the preceding embodiment, wherein forecasting the motion of the mobile robot with an unknown future path comprises varying the future path over each of the plurality of sequences and forecasting the motion for each such future path.

M68. The method according to the preceding embodiment and with the features of embodiment M15, wherein the result of the forecast corresponds to success if the result of the forecast for at least one of the plurality of sequences corresponds to success.

M69. The method according to the preceding embodiment and with the features of embodiment M20, wherein the method comprises, in response to the result of the evaluation corresponding to success, causing the first-generation mobile robot to move along any one of the plurality of sequences, the result of which corresponds to success.

M70. The method according to any of the preceding method embodiments, wherein the method comprises, at least in part, a computer-implemented method.

Below system embodiments will be discussed. These are abbreviated by the letter "S" followed by a number. Whenever reference is herein made to the system embodiments, the following embodiments are meant.

S1. A system for managing traffic in an area traversed by a plurality of mobile robots, wherein each of the plurality of mobile robots is configured to attain one of a plurality of allowed configurations, each of the plurality of mobile robots being further configured to change the configuration by making one of a plurality of allowed transitions, wherein the system is configured to:
determine a blocked transition of a second mobile robot based, at least in part, on a configuration of a first mobile robot.

S2. The system according to the preceding embodiment, wherein the system comprises a blocked transition lookup component, wherein the system, particularly the blocked transition lookup component thereof, is configured to store an association between the blocked transition and the configuration of the first mobile robot.

S3. The system according to any of the 2 preceding embodiments, wherein the system is configured to determine all blocked transitions based, at least in part, on the configuration of the first mobile robot.

S4. The system according to the preceding embodiment and with the features of embodiment S2, wherein the system, particularly the blocked transition lookup component thereof, is configured to store an association between each of the blocked transitions and the configuration of the first mobile robot.

S5. The system according to any of the preceding system embodiments, wherein the system is configured to vary the configuration of the first mobile robot.

S6. The system according to the preceding embodiment and with the features of embodiment S4, wherein the system, particularly the blocked transition lookup component thereof, is configured to store an association between each of the blocked transitions and the configuration of the first mobile robot, for each of the varied configurations of the first mobile robot.

S7. The system according to any of the 2 preceding embodiments, wherein the system is configured to vary the configuration of the first mobile robot over each of the plurality of allowed configurations.

S8. The system according to any of the preceding system embodiments, wherein the plurality of allowed configurations is comprised in a set, wherein the system comprises a data processing component, and wherein the system, particularly the data processing component thereof, is configured to segment the set of allowed configurations into a plurality of subsets, each of the plurality of subsets comprising at least one allowed configuration.

S9. The system according to the preceding embodiment, wherein any two of the plurality of subsets are disjoint.

S10. The system according to any of the 2 preceding embodiments, wherein the system comprises a synchronization component, and wherein the system, particularly the synchronization component thereof, is configured to store a version number for each of the plurality of subsets.

S11. The system according to the preceding embodiment, wherein the system is configured to update the version number(s) for any of the plurality of subsets.

S12. The system according to any of the preceding system embodiments, wherein the system is configured to cause a mobile robot to change its configuration.

S13. The system according to any of the preceding system embodiments, wherein the system comprises a reservation request processing component, and wherein the system, particularly the reservation request processing component thereof, is configured to forecast a motion of at least one of the plurality of mobile robots, that may be referred to as a forecasted mobile robot, along a future path, the future path comprising a sequence of transitions to be executed next by the at least one mobile robot.

S14. The system according to the preceding embodiment, wherein forecasting the motion along the future path comprises evaluating at least some of the transitions in the future path.

S15. The system according to any of the 2 preceding system embodiments, wherein a result of forecasting the motion is one of success or failure.

S16. The system according to any of the preceding system embodiments, wherein the system comprises a reservation request processing component, and wherein the system, particularly the reservation request processing component thereof, is configured to receive a request, from at least one of the plurality of mobile robots, that may be called a first-generation mobile robot, to detect a deadlock in a future path, the future path comprising a sequence of transitions to be executed next by the requesting mobile robot.

S17. The system according to the preceding embodiment and with the features of embodiment S13, wherein the system is configured to evaluate the request, wherein evaluating the request comprises forecasting the motion of the first-generation mobile robot.

S18. The system according to the preceding embodiment and with the features of embodiment S15, wherein a result of evaluating the request corresponds to the result of forecasting the motion.

S19. The system according to the preceding embodiment, wherein the system is configured, in response to the result being failure, to queue the request for re-evaluation.

S20. The system according to any of the 3 preceding embodiments, wherein the first-generation mobile robot is configured to change its configuration based, at least in part, on the result of evaluating the request.

S21. The system according to any of the preceding embodiments and with the features of embodiment S17, wherein the evaluation of the request of the first-generation mobile robot corresponds to a cycle, the cycle being initiated at the start of the evaluation of the request of the first-generation mobile robot and the cycle being terminated with the determination of the result of the evaluation of the request of the first-generation mobile robot.

S22. The system according to the any of the preceding system embodiments and with the features of any of embodiments S13, and S16, wherein the future path comprises a known future path comprising a known sequence of transitions to be executed next by the mobile robot.

S23. The system according to any of the preceding system embodiments and with the features of embodiment S21, wherein the system is configured to store/add and/or delete, during the cycle, the configuration attained by each mobile robot involved in the cycle.

S24. The system according to any the preceding system embodiments and with the features of embodiment S21, wherein the system is configured to store, during the cycle, the transitions blocked based, at least in part, on the configurations attained by each mobile robot involved in the cycle.

S25. The system according to any of the preceding system embodiments and with the features of embodiments S10, and S21, wherein the system is configured to retrieve and store, during the cycle, a current version number of the subset comprising the configuration attained by each mobile robot involved in the cycle.

S26. The system according to any of the preceding system embodiments and with the features of embodiment S14, wherein evaluating a transition comprises determining if the transition is blocked.

S27. The system according to the preceding embodiment and with the features of embodiment S4, wherein determining if the transition is blocked comprises determining if there exists an association between the transition and a current configuration of at least one of the plurality of mobile robots other than the forecasted mobile robot.

S28. The system according to any of the 2 preceding embodiments and with the features of embodiment S24, wherein determining if the transition is blocked comprises determining if the transition was stored as a blocked transition during the cycle.

S29. The system according to any of the 3 preceding embodiments and with the features of embodiments S18, and S20, wherein the system is configured, in response to the transition being determined to be blocked, to determine the result of the evaluation to be failure.

S30. The system according to any of the preceding system embodiments, wherein at least one of the plurality of allowed configurations comprises a mutually exclusive configuration, the mutually exclusive configuration being a configuration that may be attained by only one of the plurality of mobile robots at any time.

S31. The system according to any of the preceding system embodiments and with the features of embodiment S26, wherein determining if the transition is blocked comprises determining if the transition is possible.

S32. The system according to the preceding embodiment and with the features of embodiment S30, wherein determining if the transition is possible comprises determining if a configuration attained by the forecasted mobile robot during and/or resulting from the transition comprises a mutually exclusive configuration.

S33. The system according to the preceding embodiment, wherein the system is configured, in response to the configuration attained by the forecasted mobile robot being a mutually exclusive configuration, to determine if the mutually exclusive configuration is currently attained, at least in part, by a mobile robot other than the forecasted mobile robot.

S34. The system according to the preceding embodiment, wherein the transition is determined to be possible if the configuration attained is mutually exclusive and is not currently attained, at least in part, by a mobile robot other than the forecasted mobile robot.

S35. The system according to any of the 2 preceding embodiments, wherein the transition is determined to be possible if the resulting configuration is not mutually exclusive.

S36. The system according to any of the preceding system embodiments and with the features of embodiment S31, wherein the system is configured, in response to the transition being determined possible, to execute, virtually, the transition.

S37. The system according to the preceding embodiment and with the features of embodiment S23, wherein the system is configured to store the configuration of the forecasted mobile robot resulting from the transition.

S38. The system according to the preceding embodiment and with the features of embodiment S25, wherein the system is configured to retrieve and store the current version number of the subset to which the resulting configuration belongs.

S39. The system according to any of the 3 preceding embodiments and with the features of embodiments S4, and S24, wherein the system is configured to delete, for the current cycle, the blocked transitions associated with the configuration of the forecasted mobile robot before executing the transition.

S40. The system according to any of the 4 preceding embodiments and with the features of embodiments S4, and S24, wherein the system is configured to store, for the current cycle, the blocked transitions associated with the configuration of the forecasted mobile robot after executing the transition.

S41. The system according to any of the preceding system embodiments and with the features of embodiments S36, S39, and S40, wherein the system is configured, after updating, for the current cycle, the blocked transitions, to determine if there still exists a blocked transition stored/added in the current cycle.

S42. The system according to the preceding embodiment, wherein the system is configured, in response to there still existing a blocked transition stored/added in the current cycle, to evaluate the next transition in the future path of the forecasted mobile robot.

S43. The system according to any of the 2 preceding embodiments, wherein the system is configured, in response to there existing no blocked transition added in the current cycle, to determine if the last virtually executed transition of the forecasted mobile robot was along a bidirectional path.

S44. The system according to the preceding embodiment, wherein the determination if the last virtually executed transition was along a bidirectional path is based, at least in part, on a comparison between the blocked transitions associated with the configurations of the forecasted mobile robot before and after the execution of the transition.

S45. The system according to any of the preceding system embodiments and with the features of embodiments S11, S15, and S25, wherein the system is configured, in response to the last virtually executed transition of the forecasted mobile robot not being along a bidirectional path, to send a request to update the version number for each of the subsets for which the version number was stored during the cycle.

S46. The system according to the preceding embodiment, wherein the system is configured, in response to sending the request, to receive a notification.

S47. The system according to the preceding embodiment, wherein the notification comprises a notification corresponding to an inconsistency between the version number of a subset stored during the cycle and a current version number of the subset.

S48. The system according to the preceding embodiment, wherein the system is configured, in response to receiving the notification corresponding to an inconsistency, to determine the result of forecasting the motion of the forecasted mobile robot to be failure.

S49. The system according to any of the 3 preceding embodiments, wherein the notification comprises a notification corresponding to success in updating the version number.

S50. The system according to the preceding embodiment, wherein the system is configured, in response to receiving the notification corresponding to success, to determine the result of forecasting the motion of the forecasted mobile robot to be success.

S51. The system according to any of the preceding system embodiments and with the features of embodiments S18, and S20, wherein the system is configured, in response to the result of the evaluation of the request being success, to allow the first-generation mobile robot to execute the first transition along the future path.

S52. The system according to any of the preceding system embodiments and with the features of embodiment S43, wherein the system is configured, in response to the last virtually executed transition of the forecasted mobile robot being along a bidirectional path, to evaluate the next transition of the forecasted mobile robot.

S53. The system according to any of the preceding system embodiments and with the features of embodiment S33, wherein the configuration attained is mutually exclusive and is currently attained by a mobile robot other than the forecasted mobile robot.

S54. The system according to the preceding embodiment, wherein the system is configured to assign a generation higher than the generation of the forecasted mobile robot, such as one higher, to the mobile robot other than the forecasted mobile robot currently attaining the mutually exclusive configuration.

S55. The system according to any of the preceding system embodiments and with the features of embodiment S13, wherein the system is configured to forecast the motion of a higher-generation mobile robot.

S56. The system according to the preceding embodiment and with the features of embodiment S15, wherein the higher-generation mobile robot is configured to not change its configuration based, at least in part, on a result of the forecast.

S57. The system according to any of the 2 preceding embodiments and with the features of embodiments S13, S21, and S54, wherein the system is configured to forecast the motion of the higher-generation mobile robot as part of the cycle initiated by the first-generation mobile robot.

S58. The system according to the preceding embodiment and with the features of embodiments S23, and S28, wherein the system is configured, in response to the next transition of the higher-generation mobile robot being stored as a blocked transition during the cycle, to determine a last configuration of each mobile robot, other than the higher-generation mobile robot, involved in the cycle such that the next transition of the higher-generation mobile robot is no longer blocked.

S59. The system according to the preceding embodiment, wherein the system is configured to move, virtually, each mobile robot involved in the cycle to the said last configuration.

S60. The system according to the preceding embodiment, wherein the system is configured to determine if the first-generation mobile robot has moved back to its starting configuration as a result of each mobile robot involved in the cycle being moved to the said last configuration.

S61. The system according to the preceding embodiment and with the features of embodiment S18, wherein the result of the evaluation of the request of the first-generation mobile robot corresponds to failure if the first-generation mobile robot is determined to have moved back to its starting configuration.

S62. The system according to any of the 2 preceding embodiments and with the features of embodiment S31, wherein the system is configured, in response to the first-generation mobile robot not having moved back to its starting configuration, to determine if the next transition of the higher-generation mobile robot is possible.

S63. The system according to any of the preceding embodiments and with the features of embodiments S15, and S57, wherein the system is configured, in response to the result of the forecast of the higher-generation mobile robot being failure, to determine the result of the evaluation of the request of the first-generation mobile robot to be failure.

S64. The system according to any of the preceding embodiments and with the features of embodiments S15, and S57, wherein the system is configured, in response to the result of the forecast of the higher-generation mobile robot being success, to evaluate the next transition of a mobile robot of the highest generation lower than the generation of the higher-generation mobile robot as part of the cycle initiated by the first-generation mobile robot.

S65. The system according to any of the preceding system embodiments and with the features of embodiment S16, wherein the system is configured to receive the request from a plurality of the plurality of mobile robots.

S66. The system according to any of the preceding system embodiments and with the features of embodiment S13, wherein the forecasted mobile robot comprises a mobile robot with an unknown future path, the unknown future path comprising a plurality of sequences of transitions, any one of which can be next executed by the forecasted mobile robot, and wherein the future path comprises one of the plurality of sequences of transitions.

S67. The system according to the preceding embodiment, wherein forecasting the motion of the mobile robot with an unknown future path comprises varying the future path over each of the plurality of sequences and forecasting the motion for each such future path.

S68. The system according to the preceding embodiment and with the features of embodiment S15, wherein the result of the forecast corresponds to success if the result of the forecast for at least one of the plurality of sequences corresponds to success.

S69. The system according to the preceding embodiment and with the features of embodiment S20, wherein the system is configured, in response to the result of the evaluation corresponding to success, to cause the first-generation mobile robot to move along any one of the plurality of sequences, the result of which corresponds to success.

S70. The system according to any of the preceding system embodiments, wherein the system comprises a data processing component.

S71. The system according to any of the preceding system embodiments, wherein the system is configured to communicate with any of the plurality of mobile robots.

S72. The system according to any of the preceding system embodiments, wherein the system is configured to perform the method according to any of the preceding method embodiments.

Below computer program product embodiments will be discussed. These are abbreviated by the letter "C" followed by a number. Whenever reference is herein made to the computer program product embodiments, the following embodiments are meant.

C1. A computer program product comprising instructions, when executed on a data processing component of a system according to any of the preceding system embodiments, to perform the method according to any of the preceding method embodiments.

### Brief Description of Figures

- Figure 1: depicts an embodiment of a system for mobile robot traffic management;
- Figure 2: depicts an embodiment of a uni-directional path;
- Figure 3: depicts an embodiment of a bi-directional path;
- Figure 4: depicts an embodiment of a method for mobile robot traffic management; and
- Figure 5: depicts an exemplary mobile robot traffic situation.

### Detailed Description of Figures

In the following, embodiments of the method may be referred to by the terms "deadlock detection", "deadlock avoidance", and "deadlock check" interchangeably.

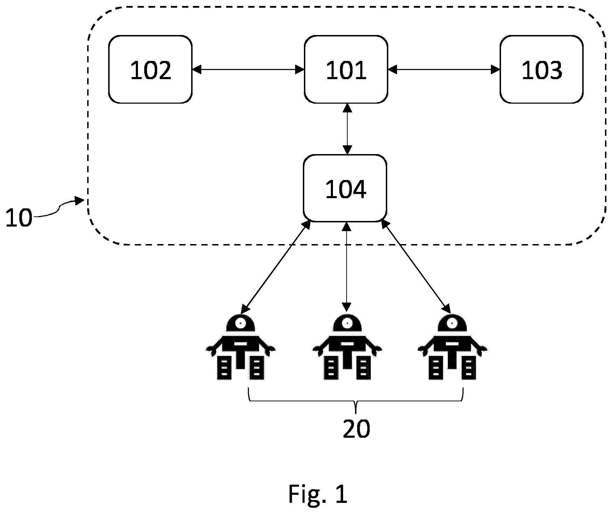

Figure 1 depicts one embodiment of a system 10 for configured for detecting and/or avoiding a deadlock between a plurality of mobile robots 20 deployed in an area. The plurality of mobile robots 20 and the area in which they move may be referred to as a physical environment.

In the following, a robot configuration of a mobile robot 20 may be understood to comprise any of a position, an orientation, a size of the mobile robot 20 in any dimension, when empty or when loaded, a number and/or size of trailers attached to the mobile robot 20, a kind of the mobile robot 20, a spatial padding added to the mobile robot 20 to further enhance safety, or any other aspects of the mobile robot 20 as may cause the mobile robot 20 to block another mobile robot 20 from changing its current configuration.

Further, a transition may be understood to comprise an action that may allow changing from one robot configuration to another. Moreover, generally, it may be understood, that a robot configuration may also be defined differently, as long as a transition is understood to comprise an action that allows changing from one robot configuration to another. It may also be understood that transitions may, for example, be defined by their starting and ending robot configurations and that for a defined starting robot configuration only some transitions may be possible, i.e., only some robot configurations may be attained by one transition from the defined starting robot configuration.

In some embodiments, some robot configurations may be mutually exclusive, such that if one of the plurality of mobile robots 20, say 20p, has a defined robot configuration that is mutually exclusive, no other mobile robot 20, say 20q, may attain the defined robot configuration until the mobile robot 20p has switched its robot configuration.

A deadlock may be understood to comprise a state wherein, at a given instant of time, a transition of a first of the plurality of mobile robots 2 from a current robot configuration to a next robot configuration is not possible because of a current robot configuration of a second of the plurality of mobile robots 20, and a transition of the second of the plurality of mobile robots 2 from the current robot configuration to a next robot configuration is not possible because of the current robot configuration of the first of the plurality of mobile robots 20.

Note that, by the above definition, the deadlock may arise not only between two mobile robots 20, but also among more than two mobile robots 2. For example, a deadlock may arise among three mobile robots 20a, 20b, 20c such that a next transition of the mobile robot 20a is not possible due to a current configuration of the mobile robot 20b, a next transition of the mobile robot 20b is not possible due to a current configuration of the mobile robot 20c, and a next transition of the mobile robot 20c is not possible due to a current configuration of the mobile robot 20a. Thus, the next transition of the mobile robot 20a is clearly not possible due to the current configuration of the mobile robot 20b, but also the next transition of the mobile robot 20b is not possible because of the current configuration of the mobile robot 20a, even though indirectly via the mobile robot 20c because the next transition of the mobile robot 20c is not possible due to a current configuration of the mobile robot 20a.

The mobile robots 20 may be understood to comprise any of autonomous guided vehicles, that may have defined positions that they can occupy within the area and that move by transitioning from one defined position to another defined position, or mobile robots that may be free to move to any position within the area (aside from other obstacles such as built-up areas, other mobile robots, or other such obstacles within the area).

The area may comprise a warehouse, a construction site, an industrial complex, a restaurant, an airport, a container haven, a logistics facility, or any other area where the mobile robot 20 may be deployed.

The system 10 may be configured to also detect deadlocks that may occur in the future, wherein there is no deadlock in the current configuration of any of the plurality of mobile robots 20, but wherein a deadlock would occur once any of the mobile robots 2 makes a transition.

The system 10 may comprise a reservation request processing component 101, a blocked transition lookup component 102, and a synchronization component 103. The reservation request processing component 101 may be configured to communicate, i.e., exchange data, with the blocked transition lookup component 102. The reservation request processing component 101 may be configured to communicate with the synchronization component 103.

The system 10 may further comprise a communication unit 104, configured to communicate with the reservation request processing component 101. The system 1, particularly the communication unit 104 thereof, may be configured to communicate with a mobile robot 20. In particular, the communication unit 104 may receive a reservation request from the mobile robot 20. The communication unit 104 may send a status message to the mobile robot 20. The status message may comprise data related, at least in part, to whether or not the reservation request was/will be granted.

The reservation request processing component 101 may comprise, for example, a data processing unit. The blocked transition lookup component 102 and/or the synchronization component 103 may comprise, for example, a memory unit for storage.

Further, the reservation request processing component 101 may comprise, for example, a multi-threaded data processing unit, that may be configured to process multiple reservation requests (from a multiple mobile robots 20, for example) in parallel. The blocked transition lookup component 102 and/or the synchronization component 103 may, in particular, then serve to provide shared memory access for the plurality of threads. This may be of particular advantage in allowing embodiments of the method, as described here, to be efficiently applied to large fleets of mobile robots 20.

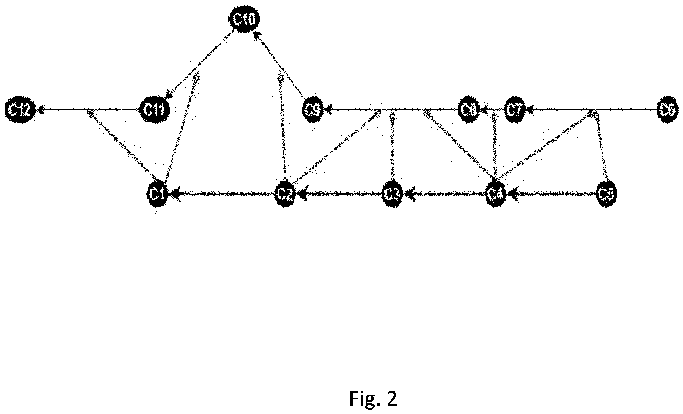

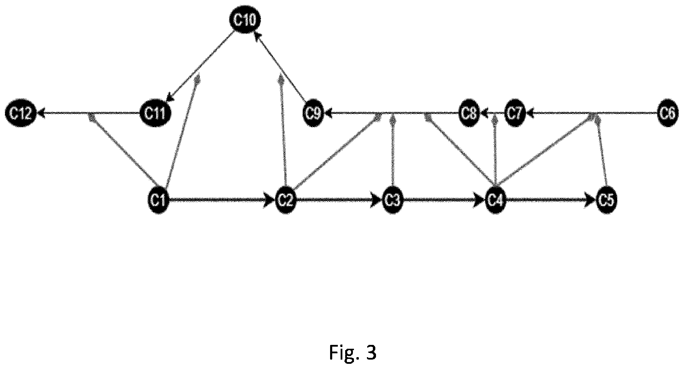

Figure 2 depicts an example of a uni-directional path, where a first mobile robot 20 travels from C5 to C1, and a second mobile robot 20 travels from C6 to C12. The configurations that may be attained by a mobile robot 20 are depicted by the letter "C" followed by a number, whereas transitions between the configurations are depicted by the straight, large arrows. The transitions blocked due to certain configurations are depicted by the small arrows. For example, the configuration C1 is depicted to block the transitions between C10 and C11 (that may be written as C10-C11) and C11-C12. Similarly, C2 blocks C9-C10 and C8-C9, C3 blocks C8-C9, C4 blocks C8-C9, C7-C8, and C6-C7, and C5 blocks C6-C7. The same configurations and the corresponding transitions blocked by them are also depicted in Figure 3, that depicts a bi-directional path, wherein the first mobile robot 20 travels from C1 to C5, while the second mobile robot travels from C6 to C12 as in Figure 2.

Figures 2 and 3 depict an exemplary embodiment of how a defined transition may be evaluated as having been along a uni-directional or a bi-directional path based, at least in part, on a comparison between the transitions blocked due to the starting and ending configurations of the defined transition. For example, consider the transition between the configurations C and C4. In Figure 2, the transition takes place from C4 to C3, while in Figure 3 the transition takes place from C3 to C4.

From Figure 2, the blocked transitions at C4 are C8-C9, C7-C8, C6-C7, and at C3 are C8-C9. At the beginning C6-C7, C7-C8, C8-C9 are added as blocked transitions, and finally only C8-C9 remains. As no transition that is a predecessor (such as C7-C8, C6-C7, etc.) of a previously blocked transition is added because of the transition from C4 to C3, the transition is evaluated as not having been along a bi-directional path.

From Figure 3, the blocked transitions at C3 are C8-C9, and at C4 are C8-C9, C7-C8, C6-C7. At the beginning C8-C9 is added as a blocked transition, and finally C6-C7, C7-C8 are also added. As a transition that is a predecessor (such as C7-C8, C6-C7, etc.) of a previously blocked transition (C8-C9) is added because of the transition from C3 to C4, the transition is evaluated as having been along a bi-directional path.

Thus, by comparing the transitions blocked between the starting and ending configurations of a defined transition, it may be possible to determine whether or not the defined transition was along a bi-directional path. It may be understood that while the above example depicted one method for determining whether or not a defined transition was along a bi-directional path, other methods may also be possible and any suitable method may be used. The present invention should not be considered limited to only the above method for determining whether or not a transition was along a bi-directional path.

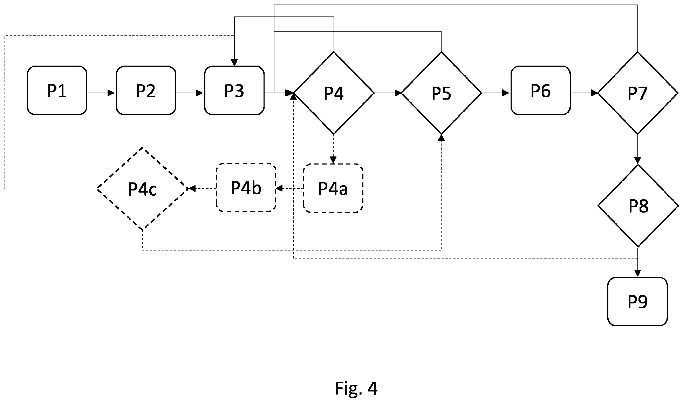

Figure 4 depicts one embodiment of a method for detecting and/or avoiding a deadlock between the plurality of mobile robots 20 according to the present invention.

The method comprises a first step, P1, comprising receiving and/or generating allowed robot configurations and allowed transitions between the robot configurations for each of the plurality of mobile robots 2 deployed in an area. In other words, for example, the step P1 may comprise, for a defined mobile robot 20, receiving all allowed robot configurations that may be attained by the mobile robot 20, and all allowed transitions between any two of the allowed robot configurations of the mobile robot 20. Note, in particular, that the mobile robot 20 may only attain a discrete, preferably finite, number of robot configurations. If the allowed robot configurations of the mobile robot 20 are not discrete, a discretization may be carried out automatically, semi-automatically, or manually.

Note that, generally, the discrete robot configurations attained by any mobile robot 20 may correspond to robot configurations desired to be attained by the mobile robot 20. In particular, for example, the mobile robot 20 may be deployed in a warehouse complex comprising one or more storage areas, for example. Then, it may be desirable for the mobile robot 20 to stop at at least one position in each of the storage areas. Thus, the discrete robot configurations may correspond to discrete positions that may be occupied by the mobile robot 20, and the discrete positions may be determined by a deployment environment of the mobile robot 20. In some embodiments, the discrete robot configurations attainable by the mobile robot 20 may be pre-defined. Generally, it may be understood that a plurality of discrete robot configurations that may be attained by the mobile robot 20, together with transitions that allow switching between the robot configurations, are available.

In a next step, P2, a lookup table of blocked transitions may be generated and/or received.

In order to determine whether or not the mobile robot 20 at position P blocks the transition T, an extension of the mobile robot 20 at position P in any dimension may be considered. In some embodiments, a maximum extension of the mobile robot 20 in any dimension may be considered, such that if the transition T is within the maximum extension of the mobile robot 20 at P, the transition T is blocked. In particular, a load carried by the mobile robot 20 at position P may be considered to determine a maximum extension of the mobile robot 20 and, thus, whether or not the mobile robot 20 at position P blocks the transition T.

Generally, the lookup table of blocked transitions may comprise, for each possible robot configuration of a defined mobile robot 20, say 20a, all the allowed transitions of other mobile robots 20 that would be blocked because of the robot configuration of the defined mobile robot 20a. In some embodiments, the lookup table of blocked transitions may be automatically generated, at least in part, by means of a heuristic. For example, as described above, the blocked transitions may be determined based on a maximum extension of the mobile robot 20a. In yet other embodiments, the lookup table of blocked transitions may be generated semi-automatically or manually.

The lookup table of blocked transitions may be accessed by the blocked transition lookup component 102 as described above, viz., the blocked transition lookup component 102 may be configured to accept a robot configuration as an input, and based, at least in part, on the input robot configuration, to determine all the allowed transitions that are blocked by the input robot configuration. The lookup table may be stored in a memory component of the system 1, for example. Alternatively, the lookup table may be accessed via a network connection to an external system.

The steps P1 and P2, as described above, may be used, generally, to initialize the system 10 for mobile robots 20 deployed in an area. For example, whenever a new mobile robot, say 20', is added to the area, the steps P1 and P2 may be performed for all allowed robot configurations of the newly added mobile robot 20'.

At any given instant, the system 10 may be further configured to query a current robot configuration of any of the plurality of mobile robots 20. For example, the system 10 may record the robot configuration of each of the plurality of mobile robots 20 after each transition made by each of the plurality of mobile robots 20, together with an initial robot configuration for each of the plurality of mobile robots 20.

Further, at any given instant, the method may comprise storing a list of blocked transitions due to the current robot configurations of each of the plurality of mobile robots 20.

In the following, a path of a mobile robot 20 is described. A path, as described herein, may be understood to comprise a sequence of transitions from a starting/initial robot configuration to an ending/final/target robot configuration. A future path may be understood to comprise a path for which the starting/initial robot configuration corresponds to the current robot configuration. A known future path may be understood to comprise a path for which a future sequence of transitions of the mobile robot 20 is known. A (partially) unknown future path may comprise a path for which a future sequence of transitions of the mobile robot 20 is not (fully) known.

Note that the future path may be unknown both where the final configuration of the mobile robot 20 corresponds to a particular robot configuration and where the final configuration of the mobile robot 20 does not correspond to a particular robot configuration. For example, a final robot configuration of the mobile robot 20, starting from a configuration C0, may comprise a configuration C1. The configuration C1 may be attained by a plurality of sequences of transitions, such as T11-T12-T13-T14 or T21-T22-T23-T24-T25. If the sequence of transitions to be taken to attain the configuration C1 is not defined, the future path may be considered unknown. Alternatively, the final configuration of the mobile robot 20 may comprise, for example, any one of C1, C2, or C3. In this case, even if there is one defined sequence of transitions from C0 to each of C1, C2, or C3, the future path of the mobile robot 20 may be considered unknown.

Note, further, that, in the following, a mobile robot 20 is described as "moving along" a path. Moving along a path may be understood to comprise the mobile robot 20 executing the sequence of transitions comprised in the path to switch its robot configuration.

Steps of the method relating, in particular, to deadlock detection and/or avoidance will now be described. In particular, embodiments of the method relating to situations where future paths of each of the plurality of mobile robots 20 are completely known, and where the future path of at least one of the plurality of mobile robots 20 is not completely known/unknown, will be described. Embodiments of the method according to the present technology, generally, proceed in a cycle-based manner such that in each cycle, the reservation request of only one of the plurality of mobile robots 20 is assessed. The mobile robot 20, for which the reservation request is assessed during a cycle, may be referred to as a first-generation mobile robot. Note that in the assessment of the reservation request of one of the plurality of mobile robots 20, the future paths of other mobile robots 2 may also have to be assessed. Such mobile robots 20 may be understood to be "involved in the cycle" and a cycle may be understood to comprise also the assessment of the future path for such other mobile robots 20. Further, such mobile robots 20 may be referred to as higher-generation mobile robots, where a generation number may be assigned to the higher-generation mobile robot based, at least in part, on a number of mobile robots starting from the first-generation mobile robot for which the path is currently under assessment.

The reservation request processing component 101 may be configured to store, for each cycle, a list of blocked transitions owing to the configuration(s) attained by any of the mobile robot(s) 20 that may be involved in the cycle. In particular, the list of blocked transitions may comprise, at the beginning of each cycle, transitions that are blocked due to a current configuration of each of the plurality of mobile robots 20.

The reservation request processing component 101 may be further configured to record a history of configurations attained by each mobile robot 20 involved in the cycle. Thus, it may be understood, that the reservation request processing component 101 may record a state comprising current configurations for each of the mobile robots 20 at each step of the cycle. This may be of advantage in carrying out the deadlock check as described herein.

A result of the deadlock check for any mobile robot 20 may comprise either success, corresponding to a deadlock-free path being detected, or failure, corresponding to no deadlock-free path being detected. If the result is success, the mobile robot 20 may be allowed to make the next transition. If the result is failure, the mobile robot 20 may not be allowed to make the next transition, and a request of the mobile robot 20 for making the next transition may get queued for later re-evaluation. This may be of advantage in improving the efficiency of managing the plurality of mobile robots 20.

Embodiments of the method where the future paths of each of the plurality of mobile robots 20 are completely known will now be discussed. As may be understood, the known future path may comprise only a finite number of transitions. For example, the known future path may comprise the next 10 transitions of a mobile robot 20. Typically, it may be appreciated that a length of the future path (i.e., a number of transitions in the future path) for which a deadlock check may be made may be limited by knowledge about the path and, usually, only the next few transitions of a mobile robot 20 may be known.

Further, it may be understood, that the method as described here is carried out hypothetically/virtually, such that no mobile robot 20 is actually moved. An actual, real movement may only be carried out once a reservation request is approved, i.e., the result corresponds to success as described above.

One of the plurality of mobile robots 20, say mobile robot 20a, that may be referred to as a first-generation mobile robot, sends a reservation request to the reservation request processing component 101, corresponding to a start of a cycle. This may comprise step P3 of the method.

The reservation request may comprise the known future path, or at least a part thereof, along which the mobile robot 20a wants to move.

The reservation request processing component 101 determines, in a next step, if the transition to the next robot configuration is blocked. This may be accomplished, in a next step, P4, at least in part, by searching through the list of blocked transitions from the current robot configurations of each of the plurality of mobile robots 20, as described above.

If the next transition of the mobile robot 20a, a first-generation mobile robot, is found in the list of blocked transitions, the deadlock check results in failure, the reservation request of the mobile robot 20a is queued for re-evaluation later on, and the mobile robot 20a is not allowed to make the next transition. This may be understood to comprise the situation that the mobile robot 20a cannot even make a first transition.

If the next transition is not found in the list of blocked transitions in step P4, the next step of determining if the transition to the next robot configuration is blocked may be executed.

The next step, P5, may comprise determining if the next robot configuration may be attained by the mobile robot 20a. In other words, the next step, P5, may comprise determining if the next transition of the mobile robot 20a is possible. In particular, when the robot configuration comprises the position of a mobile robot 20, the next robot configuration, or the next position, may not be attained by the mobile robot 20a if there is already a mobile robot at the next or an intermediate position. For example, if a mobile robot, say 20b, that may be referred to as a mobile robot of a higher generation, in particular of a second generation, in the current example, is currently present at the next (or at an intermediate) position, the mobile robot 20a cannot move unless the mobile robot 20b moves.

Therefore, the check for deadlocks arising from the requested transition of the first-generation mobile robot 20a gets extended to a check for whether or not the second-generation mobile robot 20b can switch its robot configuration, and, thus, to deadlocks arising from a next transition of the mobile robot 20b. The reservation request processing component 101 may then continue checking for deadlocks as if the mobile robot 20b made the request for a next transition in its future path. Further steps of the method in this case are described further below. The current, possibly hypothetical, configuration of the mobile robot 20a is not changed.

If, however, the next robot configuration requested by the mobile robot 20a may be attained, i.e., the transition to the next robot configuration is possible, the mobile robot 20a is virtually/hypothetically moved to the next configuration.

The reservation request processing component 101, in a next step, P6, adds, to the list of blocked transitions for the current cycle, all blocked transitions from the new virtual robot configuration of the mobile robot 20a, and deletes, from the list for the current cycle, the blocked transitions from the old, possibly virtual, robot configuration of the mobile robot 20a.

In a next step, P7, the reservation request processing component 101 determines if the list of blocked transitions comprises a transition that was added in the current cycle. If there still remains a transition that was added in the current cycle, the reservation request processing component 101 repeats the method from step P4 onwards for the next transition of the mobile robot 20a, i.e., after having made a first transition.

If, however, no transition that was added in the current cycle remains, the reservation request processing component 101 may, in a next step, P8, determine if the last transition made by the mobile robot 20a was along a bidirectional path. The determination if the last transition was made along a bidirectional path may be made based, at least in part, on a comparison of the old and the new blocked transitions. For example, if there is at least one common blocked transition, the mobile robot 20a may be considered to have moved along a bidirectional path.

If the last transition is determined to have been along a bidirectional path, the reservation request processing component 101 repeats the method from step P4 onwards for the next transition of the mobile robot 20a.

If, however, the last transition is determined to not have been along a bidirectional path, the deadlock check is considered complete without a deadlock having been detected and the mobile robot 20a is allowed, in a next step P9, to make the first transition along the requested path.

As described above, during the process of evaluating the path of the mobile robot 20a, the path of other, higher-generation, mobile robots 20 may have to be evaluated as well. For example, in evaluating a next transition of the mobile robot 20a, it may be found blocked due to the next configuration being mutually exclusive and a second-generation mobile robot 20b being in that configuration. The deadlock check may then have to also be performed for the mobile robot 20b.

When the method as described above is repeated for the second-generation mobile robot 20b (mobile robot 20b or any higher-generation mobile robot), the method may also comprise the step P4, as described above, comprising determining if the next transition of the mobile robot 20b is comprised in the list of blocked transitions for the current cycle (i.e., the cycle started with the reservation request of the mobile robot 20a).

If the next transition is determined to be in the list of blocked transitions for the current cycle, the method may comprise a step, P4a, comprising determining the last state (i.e., configuration of each of the plurality of mobile robots 20, except mobile robot 20b, that have been involved in the current cycle) in the current cycle, when the blocked next transition of the mobile robot 20b was not blocked. In other words, the reservation request processing component 101 may determine the last configuration of each mobile robot 20, except mobile robot 20b, involved in the current cycle such that the next transition, being currently assessed, of the mobile robot 20b is not blocked.

The reservation request processing component 101 may, in the next step, P4b, (virtually) move each mobile robot 20, except mobile robot 20b, back to the last configuration so determined. Note that, in some embodiments, such a configuration may not exist. No mobile robot 20 may then be (virtually) moved back.

Then, in a next step, P4c, the reservation request processing component 101 may determine if the movement back results in the first-generation mobile robot 20a being moved to its starting configuration, corresponding to a deadlock having been detected. If the mobile robot 20a is determined to have been moved back to its starting configuration, the deadlock check for the mobile robot 20a ends and the reservation request for the mobile robot 20a is queued for re-evaluation later.

However, if the first-generation mobile robot 20a is not moved back to its starting configuration, the deadlock check for the mobile robot 20b continues with evaluation of the subsequent step P5, as described above.

For example, a mobile robot 20c, that may be referred to as a third-generation mobile robot, may be in a configuration that is mutually exclusive and that is to be next attained by the mobile robot 20b. The deadlock check may get extended to the third-generation mobile robot 20c, as described above. Once a deadlock-free path has been found for the third-generation mobile robot 20c, the deadlock check for the third-generation mobile robot 20c may end, with the mobile robot 20c ending up in a defined end configuration. The deadlock check for the second-generation mobile robot 20b may then be resumed, with the mobile robot 20c in the defined end configuration (depicted as the dashed arrow after step P8 in Figure 4).

The deadlock check for the mobile robot 20b, or any other higher-generation mobile robots, continues until the same conditions as for the first-generation mobile robot 20a are met, viz., any transitions added to the list of blocked transitions while assessing the path of mobile robot 20b have been removed, and the last transition of the mobile robot 20b was not along a bidirectional path.

In other words, if the deadlock check is being carried out for a mobile robot 20, other than the first-generation mobile robot 20a that sent the initial reservation request, additional steps P4a, P4b, and P4c may be carried out.

The method, as described above, may be used to check for deadlocks where the future path of each of the plurality of mobile robots 20 is completely known. In cases where the future path is, at least partially, unknown, the method may be carried out, as above, with each possible path being evaluated for each of the mobile robots 20 involved in a cycle. Once at least one deadlock-free path has been found, corresponding to the result of the deadlock check being success, the reservation request is granted and the mobile robot 20 making the request may be allowed to move along the deadlock-free path. If no deadlock-free path is found, corresponding to the result of the deadlock check being failure, the reservation request is queued for re-evaluation later on. If a plurality of deadlock-free paths is found, the mobile robot 20 may be allowed to move along any one of the plurality of deadlock-free paths, if the mobile robot 20 is similar to the mobile robot 20a described above, i.e., has initiated a reservation request. If, however, the mobile robot 20 is similar to the mobile robot 20b or 20c described above, i.e., a mobile robot 20 that has not initiated a reservation request but the future path of which is under consideration in a cycle, the deadlock check for the mobile robot 20 initiating the reservation request (i.e., similar to the mobile robot 20a) may be carried out with each of the deadlock-free paths being traversed by the mobile robot 20 similar to the mobile robot 20b or 20c.

The method, as described above, may be used to determine if one mobile robot 20a may be allowed to make a next transition. The reservation request processing component 101 may, however, be configured to receive, in parallel, reservation requests from a plurality of first-generation mobile robots 20a, say 20a1, 20a2, and 20a3. The synchronization component 103 may be of particular advantage in determining which of the mobile robots 20a1, 20a2, and 20a3 may be allowed to make the next transition. In particular, the synchronization component 103 may be configured to determine which of the mobile robots 20a1, 20a2, and 20a3 have paths that are completely independent of any of the other mobile robots 20a1, 20a2, and 20a3, such that their reservation requests may be granted so long as a deadlock-free path has been found.

In order to process multiple reservation requests in parallel, the method may comprise a further step, P0, comprising segmenting the set of allowed configurations into disjunct subsets of configurations. In other words, the set of allowed configurations may be divided into a plurality of subsets, each subset containing at least one allowed configuration, such that no two subsets overlap with each other. As may be appreciated, the division into subsets each comprising exactly one configuration may lead to decreased efficiency.

The segmentation into subsets may be carried out manually, semi-automatically, or automatically. The segmentation may be based, at least in part, on a layout of the area traversed by the plurality of mobile robots 20.

The synchronization component may be configured to store a version number for each of the plurality of subsets. For example, the version number may be zero at the beginning for each of the subsets.

During the forecast, in each cycle as described above, the reservation request processing component 101 may maintain a list of the subsets, or at least references thereto, touched by a mobile robot 20, i.e., the reservation request processing component 101 may determine the subset to which a configuration (virtually) attained by the mobile robot 20 belongs, and add the so-determined subset, or at least a reference thereto, to a list. Further, the reservation request processing component 101 may retrieve a current version number of the subset from the synchronization component 103 and store it together with the subset, or the reference thereto.

At the end of the cycle, the reservation request processing component 101 may be configured to attempt updating the version number for each of the subsets stored in the list during the cycle. For example, the reservation request processing component 101 may send a request to the synchronization component 103 for a current version number of each of the subsets stored in the list.

If the retrieved version number of any of the subsets is determined to be different from the version number of that subset stored in the reservation request processing component 101, the result of the reservation request corresponds to failure and the reservation request is queued for re-evaluation.

If, however, the retrieved version number for each of the subsets in the list is determined to be the same as that stored in the reservation request processing component 101 at the beginning of the cycle, the result of the reservation corresponds to success and the reservation request is granted. Further, the version numbers of each of the subsets in the list are requested to be updated.

Thus, the reservation requests for a plurality of mobile robots 20 may be granted in parallel, in so long as they do not touch the same subsets, corresponding, for example, to the plurality of mobile robots 20 traversing different parts of the area. In particular, it is an advantage of the present technology, that mobile robots 20 that do not interact with another mobile robot 20 may be allowed to move independently, allowing efficient scaling to large fleets of mobile robots 20.

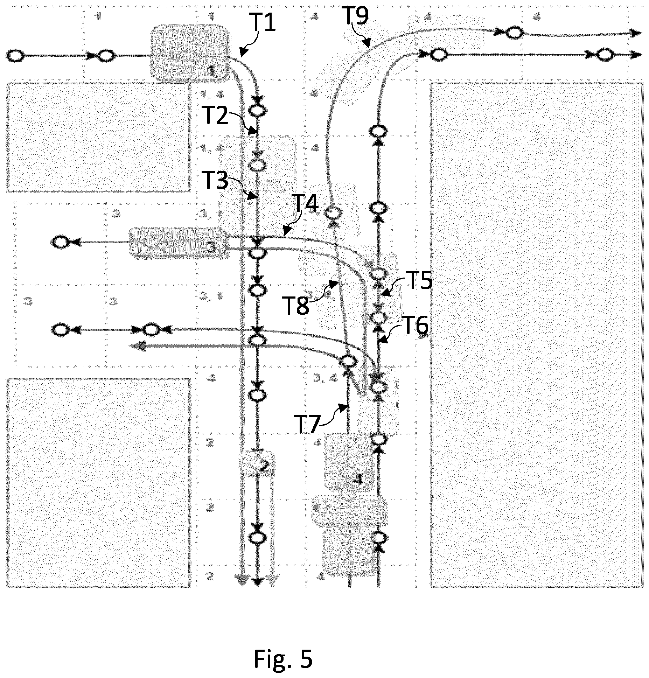

Figure 5 depicts an exemplary situation for which embodiments of the present invention may be of particular advantage. Figure 5 depicts four mobile robots, 1, 2, 3, and 4, traversing an area containing a bidirectional lane. It may be understood that the depicted mobile robots 1 to 4 may be similar to the mobile robots 20 described above. The future paths of each of the four mobile robots, 1 to 4, are completely known and are depicted as long arrows starting at each of the mobile robots 1 to 4. For example, mobile robot 1 has a future path that goes straight to the bottom of the figure after turning into the bidirectional lane.

The area is also shown to be divided into segments of equal area. At least some of these segments may correspond to the subsets of allowed configurations that may be of advantage in parallel processing of reservation requests, as described above. The allowed configurations of the mobile robots, 1 to 4, may comprise positions as indicated by circles in Figure 5. The allowed transitions between the different configurations are indicated by small arrows connecting two circles in Figure 5. Some allowed configurations are also labelled in Figure 5, such as T1 to T9.

With reference to Figure 5, mobile robot 1, that corresponds to a first-generation mobile robot, sends a request to the reservation request processing component 101, to move along its future path. The reservation request processing component 101 starts evaluating each transition along the future path of mobile robot 1 to determine if a deadlock could arise from allowing mobile robot 1 to move. To this end, the system 10 first determines if the transition T1 is blocked - it is not. The system 10 then determines if T1 is possible. There is no other mobile robot standing at the resulting position after T1, so T1 is determined to be possible, and is virtually executed. The transitions that become blocked due to the end configuration of mobile robot 1 after T1, such as T9, are added to a list for the current cycle, while those that were blocked due to the starting configuration of mobile robot 1 before T1 get removed.

The same process repeats (since transition T9 remains in the list of blocked transitions added in the current cycle) and T2 is virtually executed. T2 is along a bidirectional path, and also T9 remains in the list of blocked transitions, so T3 is evaluated.

However, when T3 is evaluated, T3 is determined to not be possible because of mobile robot 3 occupying the end position of T3. Therefore, the deadlock check gets extended to a check for the future path of mobile robot 3. Mobile robot 3 becomes a mobile robot of the second generation, or, generally, a higher generation. Mobile robot 1 is virtually held in place at the end position of T2.

In the evaluation of the future path of mobile robot 3, T4 is allowed to be virtually executed, causing T8 to be added to the list of blocked transitions in the current cycle. Since T8 and T9 now remain in the list for the current cycle, T5 is evaluated.

T5 is allowed to be virtually executed. T8 and T9 remain in the list of blocked transitions added in the current cycle. So, T6 is evaluated. However, T6 is determined to not be possible owing to the mobile robot 4. Thus, the deadlock check gets extended to the future path of mobile robot 4, corresponding to a third-generation mobile robot. Mobile robot 3 is virtually held at the end position of T5.

T7 is evaluated next. It is found to be blocked due to the position of mobile robot 3. Since mobile robot 4 is a higher-generation mobile robot, step P4a is now carried out, viz., the last configuration of the other mobile robots such that T7 is not blocked is determined. This corresponds to T5 being undone (virtually), and mobile robot 3 is virtually moved back to the starting position of T5. T7 may now be executed virtually. T8 and T9 remain in the list of blocked transitions.

So, T8 has to be evaluated. T8 is found to be blocked. In order to unblock T8, mobile robot 3 needs to be moved further back to the starting position of T4, ending up in its starting configuration. T9 still remains in the list of blocked transitions added in the current cycle.

So, T9 has to be evaluated. T9 is found to be blocked due to the position of mobile robot 1. In order to unblock T9, mobile robot 1 needs to be moved further back to the starting position of T1, which is the starting configuration for the first-generation mobile robot. Therefore, the result of the evaluation of the request of mobile robot 1 results in failure, and mobile robot 1's request is queued for re-evaluation later on.

Thus, application of the method as described above may allow detecting deadlocks, allowing control over a fleet of mobile robots 20 deployed in an area.

Overall, embodiments of the present invention may thus provide a method, a system, and a corresponding computer program product to allow detection and/or avoidance of deadlocks between mobile robots traversing an area that may be more robust, more accurate, more efficient, and easier to scale to a large number of mobile robots.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

While in the above, preferred embodiments have been described with reference to the accompanying drawings, the skilled person will understand that these embodiments were provided for illustrative purpose only and should by no means be construed to limit the scope of the present invention, which is defined by the claims.

## Claims

1. A method for managing traffic in an area traversed by a plurality of mobile robots, wherein each of the plurality of mobile robots is configured to attain one of a plurality of allowed configurations, each of the plurality of mobile robots being further configured to change the configuration by making one of a plurality of allowed transitions, wherein the method comprises:
determining a blocked transition of a second mobile robot based, at least in part, on a configuration of a first mobile robot.

2. The method according to the preceding claim, wherein the method comprises storing an association between the blocked transition and the configuration of the first mobile robot, wherein the method comprises determining all blocked transitions based, at least in part, on the configuration of the first mobile robot, wherein the method comprises storing an association between each of the blocked transitions and the configuration of the first mobile robot.

3. The method according to any of the 2 preceding claims, wherein the method comprises varying the configuration of the first mobile robot over each of the plurality of allowed configurations.

4. The method according to any of the preceding claims, wherein the method comprises forecasting a motion of at least one of the plurality of mobile robots, that may be referred to as the forecasted mobile robot, along a future path, the future path comprising a sequence of transitions to be executed next by the at least one mobile robot, and wherein forecasting the motion along the future path comprises evaluating at least some of the transitions in the future path.

5. The method according to any of the preceding claims, wherein the method comprises receiving a request, from at least one of the plurality of mobile robots, that may be called a first-generation mobile robot, to detect a deadlock in a future path, the future path comprising a sequence of transitions to be executed next by the first-generation mobile robot.

6. The method according to the preceding claim and with the features of claim 4, wherein the method comprises evaluating the request, wherein evaluating the request comprises forecasting a motion of the first-generation mobile robot along the future path, and wherein the first-generation mobile robot is configured to change its configuration based, at least in part, on a result of evaluating the request.

7. The method according to any the preceding claims and with the features of claim 6, wherein the evaluation of the request of the first-generation mobile robot corresponds to a cycle, the cycle being initiated at the start of the evaluation of the request of the first-generation mobile robot and the cycle being terminated with the determination of the result of the evaluation of the request of the first-generation mobile robot, and wherein the method comprises storing, during the cycle, the transitions blocked based, at least in part, on the configurations attained by each mobile robot involved in the cycle.

8. The method according to any of the preceding claims and with the features of claim 4, wherein evaluating a transition comprises determining if the transition is blocked, wherein determining if the transition is blocked comprises determining if the transition is possible, and wherein the method comprises, in response to the transition being determined possible, executing, virtually, the transition.

9. The method according to any of the preceding claims and with the features of claim 7, wherein the method comprises deleting, for the current cycle, the blocked transitions associated with the configuration of the forecasted mobile robot before executing the transition, and wherein the method comprises storing, for the current cycle, the blocked transitions associated with the configuration of the forecasted mobile robot after executing the transition, wherein the method comprises, after updating, for the current cycle, the blocked transitions, determining if there still exists a blocked transition stored/added in the current cycle.

10. The method according to the preceding claim, wherein the method comprises, in response to there existing no potentially blocked transition added in the current cycle, determining if the last virtually executed transition of the forecasted mobile robot was along a bidirectional path, and wherein the determination if the last virtually executed transition was along a bidirectional path is based, at least in part, on a comparison between the blocked transitions associated with the configurations of the forecasted mobile robot before and after the execution of the transition.

11. The method according to the preceding claim, wherein the plurality of allowed configurations is comprised in a set, and wherein the method comprises segmenting the set of allowed configurations into a plurality of subsets, each of the plurality of subsets comprising at least one allowed configuration, wherein any two of the plurality of subsets are disjoint, wherein the method comprises storing a version number for each of the plurality of subsets, wherein the method comprises updating the version number(s) for any of the plurality of subsets, wherein the method comprises retrieving and storing, during the cycle, a current version number of the subset comprising the configuration attained by each mobile robot involved in the cycle, wherein the method comprises, in response to the last virtually executed transition of the forecasted mobile robot not being along a bidirectional path, sending a request to update the version number for each of the subsets for which the version number was stored during the cycle, wherein the method comprises, in response to sending the request, receiving a notification, wherein the notification comprises a notification corresponding to an inconsistency between the version number of a subset stored during the cycle and a current version number of the subset, wherein the method comprises, in response to receiving the notification corresponding to an inconsistency, determining the result of forecasting the motion of the forecasted mobile robot to be failure.

12. The method according to claim 10, wherein the plurality of allowed configurations is comprised in a set, and wherein the method comprises segmenting the set of allowed configurations into a plurality of subsets, each of the plurality of subsets comprising at least one allowed configuration, wherein any two of the plurality of subsets are disjoint, wherein the method comprises storing a version number for each of the plurality of subsets, wherein the method comprises updating the version number(s) for any of the plurality of subsets, wherein the method comprises retrieving and storing, during the cycle, a current version number of the subset comprising the configuration attained by each mobile robot involved in the cycle, wherein the method comprises, in response to the last virtually executed transition of the first-generation mobile robot not being along a bidirectional path, sending a request to update the version number for each of the subsets for which the version number was stored during the cycle, wherein the method comprises, in response to sending the request, receiving a notification, wherein the notification comprises a notification corresponding to success in updating the version number, wherein the method comprises, in response to receiving the notification corresponding to success, to determine the result of evaluating the request of the first-generation mobile robot to be success, wherein the method comprises, in response to the result of the evaluation of the request being success, allowing the first-generation mobile robot to execute the first transition along the future path.

13. The method according to any of the preceding claims and with the features of claim 7, wherein the method comprises storing/adding and/or deleting, during the cycle, the configuration attained by each mobile robot involved in the cycle, wherein at least one of the plurality of allowed configurations comprises a mutually exclusive configuration, the mutually exclusive configuration being a configuration that may be attained by only one of the plurality of mobile robots at any time, wherein determining if the transition is possible comprises determining if a configuration attained by the forecasted mobile robot during and/or resulting from the transition comprises a mutually exclusive configuration, wherein the method comprises, in response to the configuration attained by the forecasted mobile robot being a mutually exclusive configuration, determining if the mutually exclusive configuration is currently attained, at least in part, by a mobile robot other than the forecasted mobile robot, wherein the configuration attained is mutually exclusive and is currently attained, at least in part, by a mobile robot other than the forecasted mobile robot, wherein the method comprises assigning a generation higher than the generation of the forecasted mobile robot, such as one higher, to the mobile robot other than the forecasted mobile robot currently attaining the mutually exclusive configuration, wherein the method comprises forecasting the motion of the higher-generation mobile robot as part of the cycle initiated by the first-generation mobile robot, wherein forecasting the motion of the higher-generation mobile robot along the future path comprises evaluating at least some of the transitions in the future path of the higher-generation mobile robot, wherein evaluating a transition comprises determining if the transition is blocked, and wherein the method comprises, in response to the next transition of the higher-generation mobile robot being blocked, determining a last configuration of each mobile robot, other than the higher-generation mobile robot, involved in the cycle such that the next transition of the higher-generation mobile robot is no longer blocked.

14. A system for managing traffic in an area traversed by a plurality of mobile robots, wherein each of the plurality of mobile robots is configured to attain one of a plurality of allowed configurations, each of the plurality of mobile robots being further configured to change the configuration by making one of a plurality of allowed transitions, wherein the system comprises a data processing component, and wherein the system is configured to:
determine a blocked transition of a second mobile robot based, at least in part, on a configuration of a first mobile robot.

15. A computer program product comprising instructions, when executed on a data processing component of a system according to claim 14, to perform the method according to any of the claims 1 to 13.
